# EUROPEAN PATENT APPLICATION

(11) **EP 4 494 721 A1**
(43) Date of publication of application: **22.01.2025**
(21) Application number: 22932320.9
(22) Date of filing: 29.11.2022
(51) Int. Cl.: A63B 69/00, A63B 71/06

(54) **INFORMATION PROCESSING DEVICE, INFORMATION PROCESSING METHOD, PROGRAM, AND INFORMATION PRESENTATION SYSTEM**

(30) Priority: 15.03.2022 JP 2022040688
(71) Applicant: Sony Group Corporation, Tokyo 108-0075 (JP)
(72) Inventor: AKAMA, Ayako, Tokyo 108-0075 (JP); NAGANO, Hidetoshi, Tokyo 108-0075 (JP); ISOZAKI, Takashi, Tokyo 141-0022 (JP); KOBAYASHI, Ko, Tokyo 108-0075 (JP); TAKIMOTO, Ayako, Tokyo 108-0075 (JP)
(74) Representative: 2SPL Patentanwälte PartG mbB
(86) International application number: PCT/JP2022/043890
(87) International publication number: WO 2023/176057

(57) **Abstract**

An information processing device includes a calculation unit that calculates a contribution of another input variable to one or more input variables among a plurality of input variables from which it is possible to acquire data in a sport competition, and a presentation control unit that selects an input variable according to the contribution calculated by the calculation unit and a focused variable set among the plurality of input variables, and causing a display unit to execute first information presentation using the selected input variable.

## Description

### TECHNICAL FIELD

The present technology relates to an information processing device, an information processing method, a program, and an information presentation system, and relates to a technology of presentation control of information based on variables obtained in sports and the like.

### BACKGROUND ART

During these years, various analyses are conducted on plays of players of sports such as baseball, softball, soccer, and basketball to help with practice and match strategies.

For example, a GPS receiver is attached to a uniform or the like of a player to measure a running distance of the player during a game, so that an exercise load of the player can be obtained.

In addition, Patent Document 1 below discloses a technique with which a target moving image and a comparative moving image can be selected from among a plurality of moving images obtained by capturing images of a motion of a person who performs a ball game and a skill level of the motion, improvement points in mechanics, and the like can be easily grasped.

### CITATION LIST

### PATENT DOCUMENT

Patent Document 1: Japanese Patent Application Laid-Open No. 2021-145702

### SUMMARY OF THE INVENTION

### PROBLEMS TO BE SOLVED BY THE INVENTION

For example, a case will be considered where various data can be obtained regarding the motion of a player in a certain sports competition, the behavior of an object (for example, a ball) used in the competition, and the like. For example, in baseball, data such as a pitch type, a ball speed, and a course, and data such as the presence or absence of a batter's swing, a batting result, and a swing speed are obtained for one ball thrown by a pitcher. By using these as variables, various analyses can be performed.

However, for example, from the viewpoint of an analyst of a team or the like, there is also an aspect that it is difficult to understand variables necessary for analysis by obtaining various data. For example, when it is desired to analyze the hit tendency of a specific batter, it is difficult to understand what kind of variable should be used to create a graph in relation to the hits of the batter. As the obtained data types are diversified, it is difficult to understand what kind of variable (factor) is related, and thus troublesome work such as sequentially selecting variables is required.

Therefore, the present disclosure provides a user interface technology that, in a case where a focused variable to be an analysis topic is specified, a variable to be presented for the focused variable is automatically selected, and a graph or the like is displayed.

### SOLUTIONS TO PROBLEMS

An information processing device according to the present technology includes a calculation unit that calculates a contribution of another input variable to one or more input variables among a plurality of input variables from which it is possible to acquire data in a sport competition, and a presentation control unit that selects an input variable according to the contribution calculated by the calculation unit and a focused variable set among the plurality of input variables, and executes first information presentation using the selected input variable.

For example, skeleton capture data of a subject obtained from an image and information such as motion of a player in sports and behavior of a ball can be acquired as various types of sensing information. In a case where various displays are performed using these, an input variable having a high contribution is automatically selected for a certain focused variable, and a chart or the like is displayed.

### BRIEF DESCRIPTION OF DRAWINGS

Fig. 1 is a diagram illustrating an information analysis system of an embodiment of the present technology.
Fig. 2 is a block diagram of the information analysis system according to the embodiment.
Fig. 3 is a block diagram of an information processing device included in the information analysis system according to the embodiment.
Fig. 4 is an explanatory diagram of a user interface image according to the embodiment.
Fig. 5 is an explanatory diagram of a user interface image according to the embodiment.
Fig. 6 is an explanatory diagram of an input variable setting window according to the embodiment.
Fig. 7 is an explanatory diagram of a focused variable setting unit according to the embodiment.
Fig. 8 is an explanatory diagram of a contribution presentation unit according to the embodiment.
Fig. 9 is an explanatory diagram of an analysis result network according to the embodiment.
Fig. 10 is an explanatory diagram of a related chart display unit according to the embodiment.
Fig. 11 is an explanatory diagram of switching of a frequency graph according to the embodiment.
Fig. 12 is an explanatory diagram of a display example of a frequency graph according to the embodiment.
Fig. 13 is an explanatory diagram of a display example of a frequency graph according to the embodiment.
Fig. 14 is an explanatory diagram of a display example of a frequency graph according to the embodiment.
Fig. 15 is an explanatory diagram of a scatter diagram and a heat map according to the embodiment.
Fig. 16 is an explanatory diagram of a pitch data filtering unit and a pitch data unit according to the embodiment.
Fig. 17 is a flowchart illustrating a first processing example according to the embodiment.
Fig. 18 is a flowchart illustrating a second processing example according to the embodiment.
Fig. 19 is an explanatory diagram of display selection of a related chart display unit according to the embodiment.
Fig. 20 is an explanatory diagram of another example of the user interface image according to the embodiment.
Fig. 21 is an explanatory diagram of a display example of a category comparison mode of an animation unit according to the embodiment.
Fig. 22 is an explanatory diagram of a display example of a one-ball look-back mode of the animation unit according to the embodiment.
Fig. 23 is an explanatory diagram of information that is a basis of an animation image according to the embodiment.
Fig. 24 is an explanatory diagram of a display example of a category comparison mode of a graph unit according to the embodiment.
Fig. 25 is an explanatory diagram of a display example of a one-ball look-back mode of the graph unit according to the embodiment.
Fig. 26 is a flowchart illustrating a third processing example according to the embodiment.
Fig. 27 is a flowchart illustrating a fourth processing example according to the embodiment.

### MODE FOR CARRYING OUT THE INVENTION

Hereinafter, an embodiment will be described in the following order.
<1. Configuration of information analysis system>
<2. Variable>
<3. User interface image>
<4. First processing example>
<5. Second processing example>
<6. Another example and processing example of user interface image>
<7. Summary and modifications>

### <1. Configuration of information analysis system>

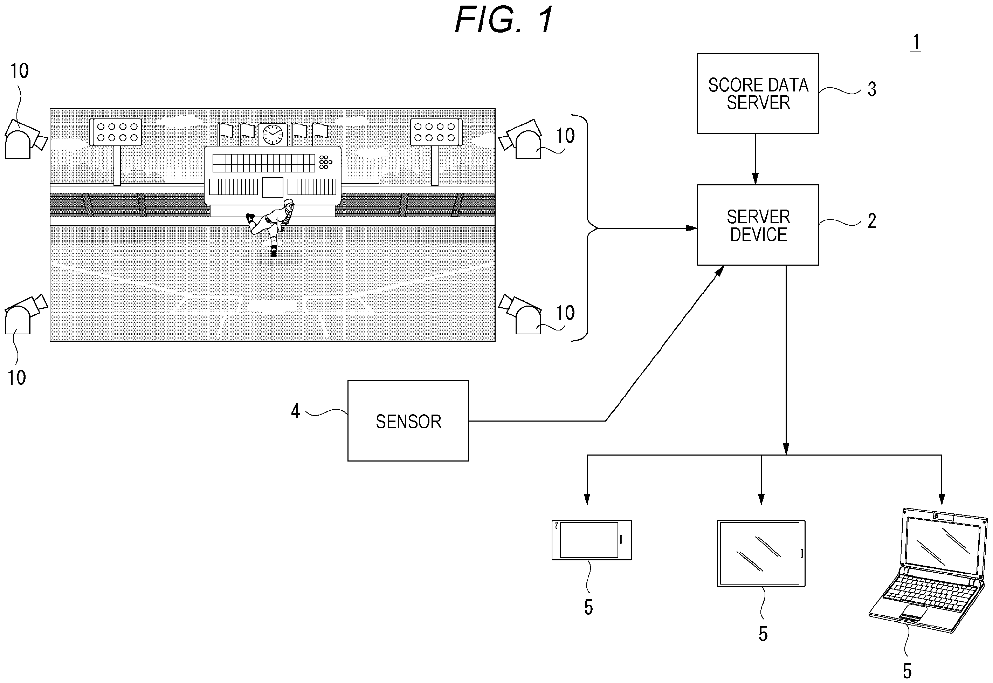

Fig. 1 illustrates an outline of an information analysis system 1 according to an embodiment.

The information analysis system 1 of Fig. 1 includes imaging devices 10, a server device 2, a score data server 3, a sensor 4, and terminal devices 5. These components are connected to one another via wired communication, wireless communication, network communication, or the like.

For example, a plurality of the imaging devices 10 images an area of a subject in a stadium such as a baseball ground, for example, the situations of a game, from various positions. Note that, although the plurality of imaging devices 10 is illustrated, at least one imaging device 10 is only required to be provided.

In the present embodiment, an example of analyzing players in baseball or softball will be described. Therefore, the imaging device 10 is arranged to perform imaging of at least the position of a pitcher or a batter, that is, an area including a mound or an area including a batter box. Of course, it may be arranged so that the position of each fielder's defense or imaging covering the entire field can be performed.

Then, in the information analysis system 1, skeleton capture data of a subject such as a pitcher or a batter is extracted from the captured image of the imaging device 10, analysis regarding a pitching motion and a striking operation is performed on the basis of the skeleton capture data, and the result can be presented.

During these years, with regard to plays in sports such as soccer and basketball, a technique for estimating postures and positions of players and referees, a position and rotation of a ball, and the like from a specified field on the basis of images captured by dedicated cameras and information obtained by sensors (acceleration sensors and GPS sensors) attached to persons (players) and an object (ball) involved in the competition is known as Electronic Performance and Tracking Systems (EPTS).

More specifically, the imaging devices 10 capture images for obtaining such EPTS data as skeleton capture data.

The images captured by the imaging devices 10 can also be used as real images of a match or the like.

Note that in the present disclosure, "images" include both moving images and still images. It is assumed, for example, that the imaging devices 10 mainly capture moving images, but images displayed on the terminal devices 5 might be moving images or still images.

In addition, the "images" refer to images actually displayed on a screen, but the "images" in a signal processing process or a transmission path until being displayed on the screen refer to image data.

EPTS data generated on the basis of images captured by the imaging devices 10 is transmitted to the server device 2. For example, in a case where an information processing device (not illustrated) that records images captured by a plurality of the imaging devices 10 and generates the EPTS data on a stadium side such as a baseball ground is provided, the EPTS data generated by the information processing device is transmitted to the server device 2.

Alternatively, captured images obtained by the imaging devices 10 may be transmitted to the server device 2, and the server device 2 may generate EPTS data.

The sensor 4 is a sensor that detects motions of a player, a ball, and the like. Specifically, a sensor attached to a player or a ball, such as the acceleration sensor or the GPS sensor described above, is assumed. Information regarding the motions of the players can also be obtained from information detected by the sensors 4. Alternatively, the information of the sensor 4 can be used supplementally when the skeleton capture data is obtained or a posture or the like is estimated from an image. The detection information of the sensor 4 can also be used for the speed, rotation speed, trajectory, and the like of the ball.

The detection information of the sensor 4 may be transmitted to the server device 2, or may be input to the information processing device (not illustrated) that generates the EPTS data on a stadium side such as a baseball ground.

The score data server 3 is, for example, an information processing device of an association that generates and distributes the score data of baseball. Here, the score data server 3 is configured as a server device capable of transmitting the score data of a game to the server device 2.

The score data server 3 may sequentially transmit the score data to the server device 2 during the game, or may collectively transmit all the score data of the game after the game, for example.

In the case of baseball, the score data includes various types of information of a game as follows.

For example, there is information of the entire game, such as scores for each inning of the game and information of players. Furthermore, information for each pitch of a pitcher is included. The score data includes, for each pitch, the information of, for example, a pitching time, a pitcher's name, a batter's name, whether a batter is right-handed or left-handed, presence or absence of a runner on first base, second base, or third base, a runner's name, a strike/ball count, whether the pitch is a ball or a strike, an out count, a batting result (hit, swinging and miss, overlooking, foul, ground ball out, fly out, foul fly, etc.), a ball speed, a type of pitch, a rotation speed, a rotation axis, a course, and various types of other information.

The terminal device 5 is, for example, an information processing device such as a smartphone, a tablet terminal, or a personal computer, and as the terminal device 5, for example, a device used by a person related to a baseball team such as an analyst of the baseball team is assumed. Then, the terminal device 5 is a device that presents various types of information for analyzing the motion of each player to the analyst or the like.

The server device 2 performs various types of processing for presenting the analysis information in the terminal device 5. For example, it is conceivable to perform processing of generating a comparison image on the basis of skeleton capture data of a subject generated from images captured by the imaging devices 10. The comparison image is an image in which two or more samples as specific motions are extracted, and the motions are compared and presented. The specific motion is, for example, a pitching motion of a pitcher. The server device 2 generates a comparison image (pitch comparison image) that allows comparison of a pitching motion of a certain pitch of a certain pitcher with a pitching motion of another pitch of the same pitcher or another pitcher, and causes the comparison image to be displayed on the terminal device 5. The server device 2 can generate the pitching comparison image by using skeleton capture data about the pitching motion.

Furthermore, for example, the server device 2 uses a certain variable as a focused variable, and performs information presentation using another variable having a causal relationship with the focused variable.

Examples of the variables will be described later, but there are items of score data and items related to a pitching motion and a striking operation. For example, items such as "game date and time", "ball speed", "pitch type", and "batter name" are variables.

Specific data of the variable may be a numerical value such as "135 km/h" or "150 km/h" of "ball speed", or may be a category such as "fast ball", "change up", "cut ball", or "split" of "pitch type".

The server device 2 can input information of various variables, that is, numerical values and categories of variables from the EPTS data, the detection data by the sensor 4, or the score data from the score data server 3.

In a case where a certain variable is set as a focused variable, the server device 2 can calculate a contribution to the focused variable with respect to various variables to be acquired, and perform various display controls according to the contribution.

Note that variables handled by the server device 2 in these processes are referred to as "input variables" for the sake of description. The input variables may be all or some of the variables obtained by the imaging device 10, the sensor 4, and the score data server 3. Furthermore, for example, the range to be applied to the processing may be selected or limited as the input variable according to the convenience of the user.

The "focused variable" is, for example, a variable selected by the user among the input variables. The variable that can be selected as the focused variable may be all the input variables or only a part of the input variables.

As the server device 2, an information processing device that performs cloud computing, that is, a cloud server, is assumed.

However, the processing for causing the comparison image to be displayed on the terminal device 5 may be performed by an information processing device except for the cloud server. For example, it is also conceivable that an information processing device such as a personal computer installed in a game venue has a function as the server device 2 and performs acquisition of skeleton capture data, processing of generating a comparison image, and the like. Furthermore, it is also conceivable that the terminal device 5 also has a function as the server device 2 and performs processing or the like using the focused variable.

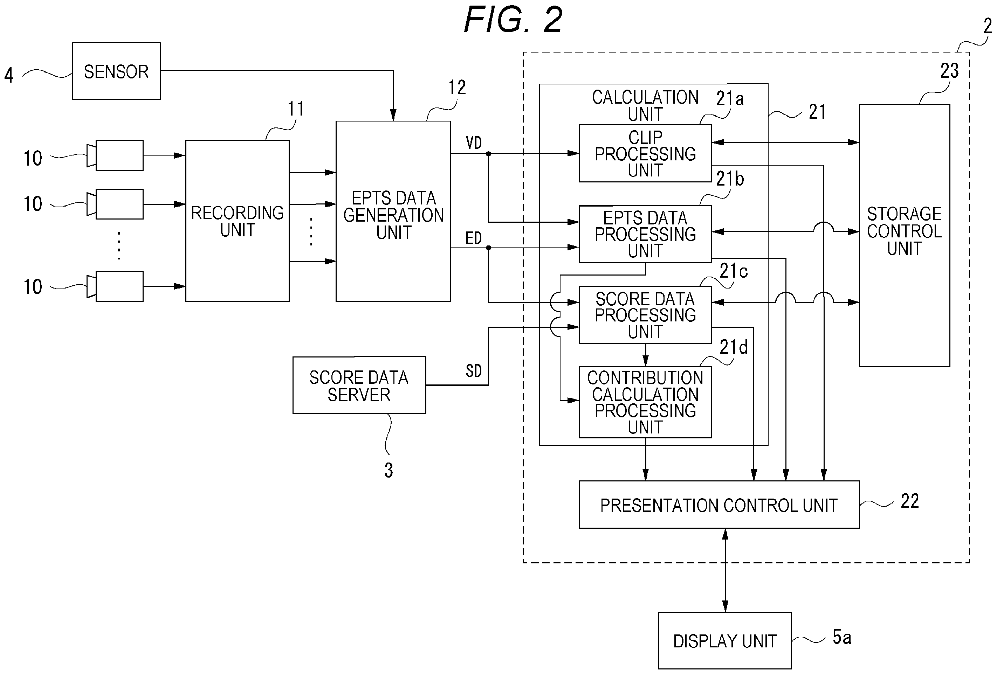

Fig. 2 illustrates an example of a functional configuration of the server device 2 and an input/output system relating to the server device 2 in the information analysis system 1 illustrated in Fig. 1 referred to above.

The plurality of imaging devices 10 is implemented as, for example, digital camera devices including imaging elements such as charge-coupled device (CCD) sensors or complementary metal-oxide-semiconductor (CMOS) sensors, and obtains captured images as digital data. In this example, each imaging device 10 obtains a captured image as a moving image.

As described in Fig. 1, each imaging device 10 captures an image of a state of a baseball stadium game, and each imaging device is arranged at a predetermined position. The number of imaging devices 10 is one or more and is not particularly specified, but it is advantageous for the purpose of generating accurate EPTS data that the number is as large as possible.

Each of the imaging devices 10 captures a moving image in a synchronized state, and outputs the captured image.

A recording unit 11 records each of the images captured by the plurality of imaging devices 10 and supplies the captured image to an EPTS data generation unit 12.

The EPTS data generation unit 12 performs analysis processing on one or a plurality of captured images, generates EPTS data individually, and then generates overall EPTS data by integrating together the individual EPTS data. The EPTS data includes, for example, positions of players (pitcher, fielder, batter, or runner) or the ball at each frame timing, skeleton capture data of the players, postures of the players based on the skeleton capture data, information of a rotation speed and a rotation direction of the ball, and the like.

The EPTS data generation unit 12 may also generate EPTS data using not only captured images but also information obtained by the sensors 4, that is, for example, information from the acceleration sensor embedded in the ball and the GPS sensors attached to uniforms of the players.

The EPTS data generation unit 12 can generate, as the EPTS data of the entire game, for example, information for determining the pitching motion or speed or trajectory of a ball for each of all pitches of a pitcher during a game.

The EPTS data generation unit 12 can generate the EPTS data from a plurality of captured images obtained by a plurality of imaging devices 10, and can also generate the EPTS data from a plurality of captured images obtained by one imaging device 10. Furthermore, the EPTS data generation unit 12 can generate EPTS data from a plurality of images and information from one or a plurality of sensors and can also generate EPTS data from one captured image and information from one of the sensors.

The EPTS data ED generated by the EPTS data generation unit 12 is transmitted to the server device 2. Image data VD captured by the imaging devices 10 is also transmitted to the server device 2 via the EPTS data generation unit 12, for example. In particular, the image data VD obtained by imaging the pitching motion of the pitcher is transmitted to the server device 2.

Note that, the EPTS data generation unit 12 may be provided in the server device 2. For example, in this case, images captured by the imaging devices 10 and the detection information of the sensor 4 are only required to be transmitted to the EPTS data generation unit 12 in the server device 2 via network communication or the like.

In addition, as described with reference to Fig. 1, the score data SD is sequentially transmitted from the score data server 3 to the server device 2.

Note that the detection data obtained by the sensor 4 may be used for generating EPTS data, or may be transmitted to the server device 2 to be information corresponding to one input variable.

The server device 2 includes an information processing device such as a computer device, and is provided, by software, for example, with functions as a calculation unit 21, a presentation control unit 22, and a storage control unit 23.

The calculation unit 21 inputs the image data VD, the EPTS data ED, and the score data SD, and generates various images for analysis, or the like. In particular, in the present embodiment, for example, in a sports event such as baseball, contribution calculation processing of calculating a contribution of another input variable to one or more input variables among a plurality of input variables from which data can be acquired is performed. Note that the focused variable may be used as one or more input variables among the plurality of input variables. That is, the contribution of another input variable to the focused variables may be calculated. Hereinafter, description will be given on the assumption that the calculation unit 21 calculates the contribution of another input variable to the focused variables among the plurality of input variables from which data can be acquired.

Thus, the calculation unit 21 performs processes as a clip processing unit 21a, an EPTS data processing unit 21b, a score data processing unit 21c, and a contribution calculation processing unit 21d.

The clip processing unit 21a performs a process of generating a clip image from the image data VD. For example, in response to the user designating a certain pitch, the clip image generation processing is performed in advance or sequentially as necessary so that the clip image related to the pitch is displayed.

The EPTS data processing unit 21b generates information serving as various input variables on the basis of the EPTS data ED, that is, data such as skeleton capture data of the player, the position of the ball, and the number of revolutions.

The score data processing unit 21c generates information to be various input variables on the basis of the score data SD acquired from the score data server 3.

The contribution calculation processing unit 21d performs contribution calculation processing of calculating the degree of causal relationship between various input variables, that is, the contribution (contribution rate) of another variable with respect to a certain variable. Specifically, in a case where the focused variable is set, the contribution of another input variable to the focused variable is calculated.

Various algorithms can be applied to the calculation processing of the contribution. For example, regression analysis or causal analysis processing for calculating a correlation index between variables can be used. In addition, the method of calculating the contribution is not limited to the method using the causal analysis processing. For example, it is also possible to use a contribution estimated using contribution estimation processing such as SHapley Additive exPlanations (SHAP) or LIME (Local Interpretable Model-agnostic explanation) with respect to an inference model such as machine learning.

The storage control unit 23 performs processing of storing the received image data VD, EPTS data ED, and score data SD in a storage medium. In addition, the storage control unit 23 performs processing of storing various types of data generated by the calculation unit 21 in the storage medium.

The presentation control unit 22 performs processing of generating a user interface (hereinafter referred to as "UI") image and causing the image to be displayed on a display unit 5a of the terminal device 5.

For example, the presentation control unit 22 selects an input variable in the UI image according to the result of the contribution calculation processing, and executes first information presentation using the selected input variable. The first information presentation refers to, for example, display of a chart or the like using a focused variable and an input variable having a high contribution to the focused variable.

Furthermore, the presentation control unit 22 performs control to execute second information presentation indicating the contribution to the focused variable for each input variable that has been a target for calculation of the contribution in the contribution calculation processing in the UI image. In the second information presentation, an image or the like indicating the contribution of various input variables to the focused variables is displayed.

Furthermore, the presentation control unit 22 can also display the clip image generated by the processing of the calculation unit 21 in the UI image.

Furthermore, the presentation control unit 22 detects a user's operation on the UI image, and updates the setting, updates the display, and the like according to the operation.

The calculation unit 21, the presentation control unit 22, and the storage control unit 23 described above may be provided in one information processing device, or may be provided separately in a plurality of information processing devices.

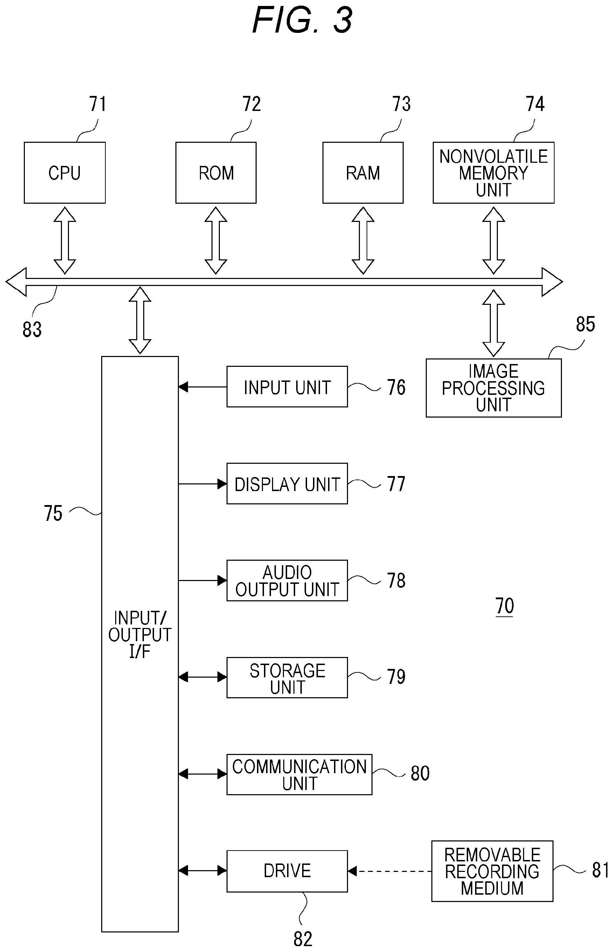

Next, a configuration of an information processing device 70 used in the information analysis system 1 described above with reference to Figs. 1 and 2 will be described. For example, the server device 2, the terminal devices 5, the EPTS data generation unit 12 in Fig. 2, and the like can be achieved by the information processing device 70 illustrated in Fig. 3.

Furthermore, the information processing device 70 may be implemented as, for example, a dedicated workstation, a general-purpose personal computer, a mobile terminal device, or the like.

A CPU 71 of the information processing device 70 illustrated in Fig. 3 performs various types of processing in accordance with a program stored in a ROM 72 or a nonvolatile memory unit 74 such as an electrically erasable programmable read-only memory (EEP-ROM), for example, or a program loaded from a storage unit 79 into a RAM 73. The RAM 73 also stores, as appropriate, data and the like necessary for the CPU 71 to perform the various types of processing.

An image processing unit 85 is implemented as a processor that performs various types of image processing. For example, the image processing unit is a processor capable of performing any of image generation processing of a clip or the like, image analysis processing on a captured image or the like, generation processing of an animation image or a three dimensions (3D) image, data base (DB) processing, image effect processing, EPTS data generation processing, and the like.

The image processing unit 85 can be achieved by, for example, a CPU separate from the CPU 71, a graphics processing unit (GPU), general-purpose computing on graphics processing units (GPGPU), an artificial intelligence (AI) processor, or the like.

Note that the image processing unit 85 may be provided as a function in the CPU 71.

The CPU 71, the ROM 72, the RAM 73, the nonvolatile memory unit 74, and the image processing unit 85 are connected to one another via a bus 83. An input/output interface 75 is also connected to the bus 83.

An input unit 76 including an operation element or an operation device is connected to the input/output interface 75. As the input unit 76, for example, one of various operation elements and operation devices including a keyboard, a mouse, a key, a dial, a touch panel, a touchpad, a remote controller, and the like is assumed.

The input unit 76 detects a user operation, and the CPU 71 interprets a signal corresponding to the input operation.

In addition, a display unit 77 including a liquid crystal display (LCD), an organic electro-luminescence (EL) panel, or the like and an audio output unit 78 including a speaker or the like are integrally or separately connected to the input/output interface 75.

The display unit 77 displays various pieces of information as a user interface. The display unit 77 is implemented as, for example, a display device provided in a housing of the information processing device 70, a separate display device connected to the information processing device 70, or the like.

The display unit 77 displays various images on a display screen on the basis of an instruction from the CPU 71. In addition, the display unit 77 displays various operation menus, icons, messages, and the like, that is, graphical user interfaces (GUIs), on the basis of an instruction from the CPU 71.

For example, in a case where the information processing device 70 is considered as the terminal device 5, the display unit 77 displays a UI image and the like to be described later.

In some cases, a storage unit 79 including a solid-state drive (SSD), a hard disk drive (HDD), or the like and a communication unit 80 including a modem or the like are connected to the input/output interface 75.

In a case where the information processing device 70 is regarded as the server device 2, for example, the storage unit 79 can be regarded as the storage medium used by the storage control unit 23 to store information.

The communication unit 80 performs communication processing via a transmission path such as the Internet, and performs wired/wireless communication with various devices and communication based on bus communication or the like.

A drive 82 is also connected to the input/output interface 75 as necessary, and a removable storage medium 81 such as a flash memory, a memory card, a magnetic disk, an optical disc, or a magneto-optical disk is attached to the drive 82 as appropriate.

With the drive 82, data files such as image files, various computer programs, and the like can be read from the removable storage medium 81. The read data files are stored in the storage unit 79, and the display unit 77 and the audio output unit 78 output images and sounds included in the data files. In addition, the computer programs and the like read from the removable storage medium 81 are installed in the storage unit 79 as necessary.

With the information processing device 70, software can be installed through network communication by the communication unit 80 or the removable storage medium 81. Alternatively, the software may be stored in the ROM 72, the storage unit 79, or the like in advance.

For example, in a case where the information processing device 70 is considered as the server device 2, functions as the calculation unit 21, the presentation control unit 22, and the storage control unit 23 described above are provided by software, and processing by these functions is performed by the CPU 71 and the image processing unit 85.

### <2. Variable>

The variables to be used are exemplified by a case where the information analysis system 1 of the embodiment is applied to baseball analysis. Hereinafter, variables suitable as focused variables in baseball analysis are exemplified. The focused variable is a target for which the contribution of another input variable is calculated in the contribution calculation processing. Such focused variables include a variable related to a pitching result and a variable related to a pitching trajectory.

### [Variable related to pitching result]

- Pitching result (category such as ball, swing and a miss, strike looking, fouling, hit, and the like)
- Presence or absence of swing
- Presence or absence of hit

### [Variable related to pitching trajectory]

- Ball speed
- Vertical change amount
- Lateral change amount
- Rotation speed
- Rotation axis
- Pitching course
- Angle of the track on the home plate

Of course, the above are examples, and there are other variables suitable as the focused variables.

Although the following are also examples, the input variables include variables categorized as the following [1] to [5] .
[1] Score information
   - Pitching time
   - Batter, pitcher, catcher, and fielder
   - Opponent teams
   - Baseball ground
   - Inning
   - Scores of both teams
   - Situation of runner
   - Strike/Ball Count
   - Out count
[2] EPTS pitching trajectory
   - pitch type
   - Pitching course
   - Ball speed
   - Rotation speed
   - Rotation axis
[3] EPTS pitcher's skeleton
   - Center of gravity and position of each joint point at release
   - Angle of each joint point at release
   - Speed and acceleration of center of gravity and position of each joint point before and after release
   - Change in angle of each joint point before and after release
[4] EPTS batting trajectory
   - Ball hitting speed
   - Ball hitting angle
   - Ball hitting direction
   - Ball hitting distance
   - Rotation speed
   - Rotation axis
[5] EPTS batter skeleton/swing
   - Swing speed
   - Bad angle in contact
   - Center of gravity during contact
   - Elbow position
   - Elbow angle

### <3. User interface image>

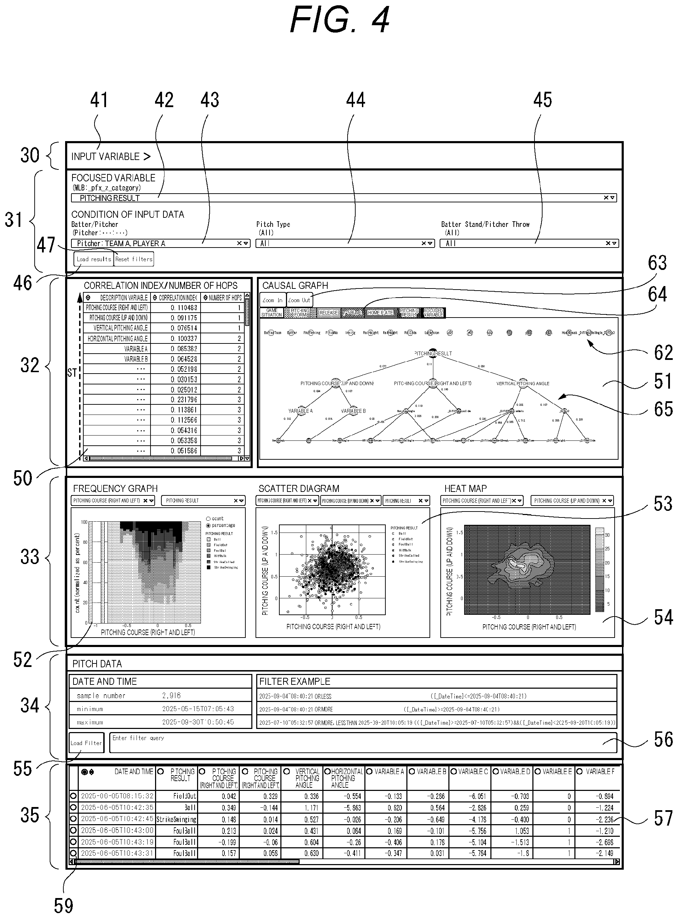

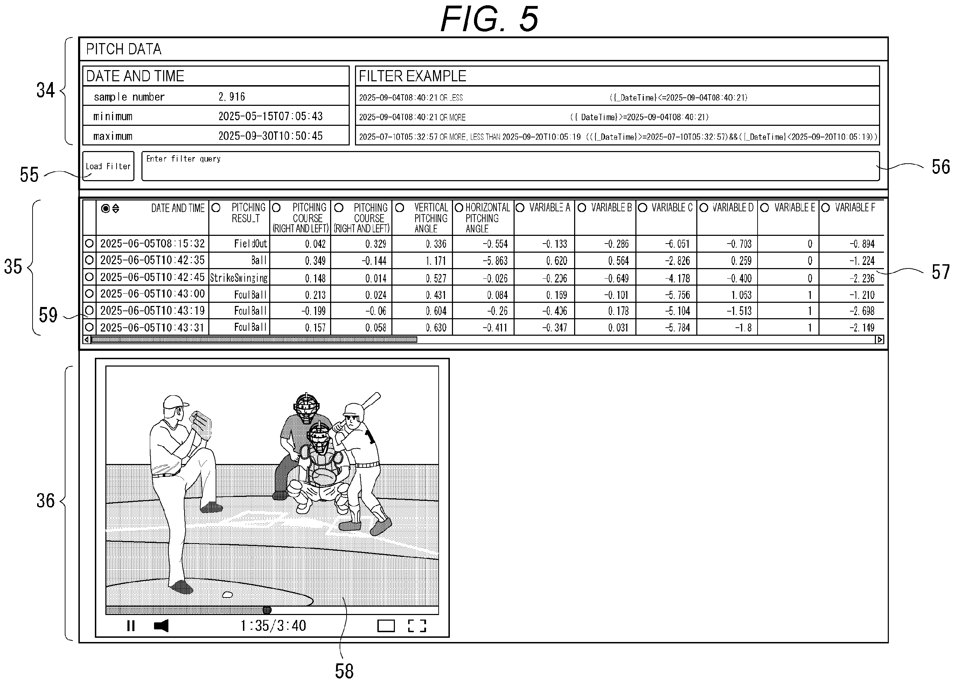

Figs. 4 and 5 illustrate examples of UI images provided by the server device 2 to the terminal device 5.

In the example of Fig. 4, the UI image includes an input variable setting unit 30, a focused variable setting unit 31, a contribution presentation unit 32, a related chart display unit 33, a pitch data filtering unit 34, and a pitch data unit 35.

Fig. 5 illustrates an example in which the clip display unit 36 is further included.

These display contents may be aggregated and displayed in one screen of the display unit 5a, or the entire contents may be displayed by scrolling or page feeding.

In addition, the entire contents are not necessarily displayed.

Each display content will be described.

The input variable setting unit 30 in Fig. 4 is a region for the user to set a range to be used as an input variable. In the input variable setting unit 30, an input variable button 41 for displaying a window for setting an input variable is prepared.

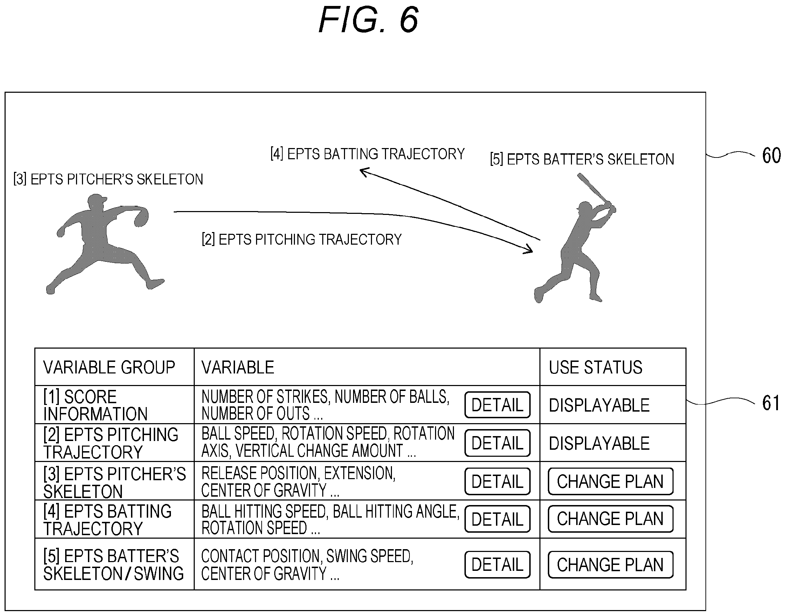

When the user operates the input variable button 41 on the screen, an input variable setting window 60 as illustrated in Fig. 6 is displayed. In the input variable setting window 60, for example, variable groups of input variables such as [1] to [5] described above are illustrated, and availability can be selected for each variable group.

First, an upper part of the input variable setting window 60 shows an image of what the variable groups of [2] to [5] are. For example, the characters "[2] EPTS pitching trajectory" are displayed together with the trajectory of the ball thrown by the pitcher, the characters "[3] EPTS pitcher's skeleton" are displayed in the vicinity of the pitcher, the characters "[4] EPTS batting trajectory" are displayed together with the trajectory of the batting, and the characters "[5] EPTS batter's skeleton/swing" are displayed in the vicinity of the batter. Thus, it is possible to intuitively understand what kind of content the variable group of [2] to [5] includes.

Then, in the input variable setting window 60, a variable group selection list 61 corresponding to the variable groups of [1] to [5] described above is displayed. In the variable group selection list 61, the content of the variable and the use status are indicated for each variable group of [1] to [5].

A part of the input variables included in the variable group is indicated as the content of the variable, and detailed content is displayed by operating a detail button.

A variable group whose use status is "displayable" indicates that the user can use the variable group for analysis.

Furthermore, a variable group whose use status is, for example, "change plan" indicates that the user cannot use the variable group for analysis. The variable group can also be used for analysis when the user changes the plan.

Thus, for example, a variable group that can be used can be provided as an optional service to the user.

The focused variable setting unit 31 in Fig. 4 is a region where the user sets the focused variable and sets the condition of the input data.

The focused variable setting unit 31 is provided with a focused variable field 42, condition fields 43, 44, and 45, a load button 46, and a reset button 47.

When the user inputs any variable into the focused variable field 42, the variable is set as a focused variable. The variable that can be input as a focused variable may be, for example, all of the input variables of the variable group enabled by the input variable setting unit 30 described above, or may be limited to a part thereof. For example, the user can selectively set the focused variable by operating a pull-down menu of the focused variable field 42. Note that the focused variable may be directly input as a character.

The condition fields 43, 44, and 45 are fields for setting conditions of data to be input. The data to be input is data as an actual value (numerical value or category) of each input variable, and a data range such as which player's data is targeted is set.

The condition field 43 inputs a condition of a batter/pitcher. For example, a team name and a player name are set. In the condition field 43, any player or player group of a batter or a pitcher is set as an analysis target. For example, a team or a player can be input through a pull-down menu or the like. Note that, in the condition field 43, one player name may be set, a group name including a plurality of players such as "all pitchers", "all right pitchers", "all left pitchers", "all batters", "all right batters", and "all left batters" may be input, or a plurality of player names may be input.

The condition field 44 is a field for setting a pitch type. All or any pitch type (ALL) can be selected from a pull-down menu. In a case where the player set in the condition field 43 is a pitcher, the pitch type held by the pitcher can be selected in the condition field 44. In a case where the player set in the condition field 43 is a batter, in the condition field 44, the pitch type of the pitcher for the batter can be selected.

The condition field 45 is a field for setting the distinction between right and left of the opponent pitcher/batter. Either left or right or both (ALL) can be selected from a pull-down menu. In a case where the player set in the condition field 43 is a pitcher, in the condition field 44, it is possible to select the right or left (right batter/left batter/all right and left) of the batter to be fought. In a case where the player set in the condition field 43 is a batter, it is possible to select right and left pitches (right throw/left throw/all) of the opposing pitcher in the condition field 44.

A range of input data to be analyzed is set in the above condition fields 43, 44, and 45. For example, when it is desired to analyze all pitch types and all right and left batters for a certain pitcher, the setting of "pitcher's name ○○", "pitch type (ALL)", and "all right and left (ALL)" may be performed. Then, the whole pitch data of the pitcher becomes the range of data input as the analysis target. Furthermore, if the setting of "batter name ΔΔ", "pitch type (sinker)", and "left handed" is performed, data in a case where a left-handed pitcher throws a sinker to the batter is the range of data to be input as an analysis target.

The load button 46 is an operation element for starting analysis. When the load button 46 is operated, the contribution calculation processing for the focused variable set at that time is executed in the range of data set in the condition fields 43, 44, and 45. Specifically, the content of each field is transmitted to the server device 2, the contribution calculation processing of the contribution calculation processing unit 21d is executed under the condition of each field, and the result is loaded to the terminal device 5.

The reset button 47 is an operation element for resetting the input of the focused variable field 42 and the condition fields 43, 44, and 45.

This is convenient, for example, in a case where it is desired to confirm all options of items of each field.

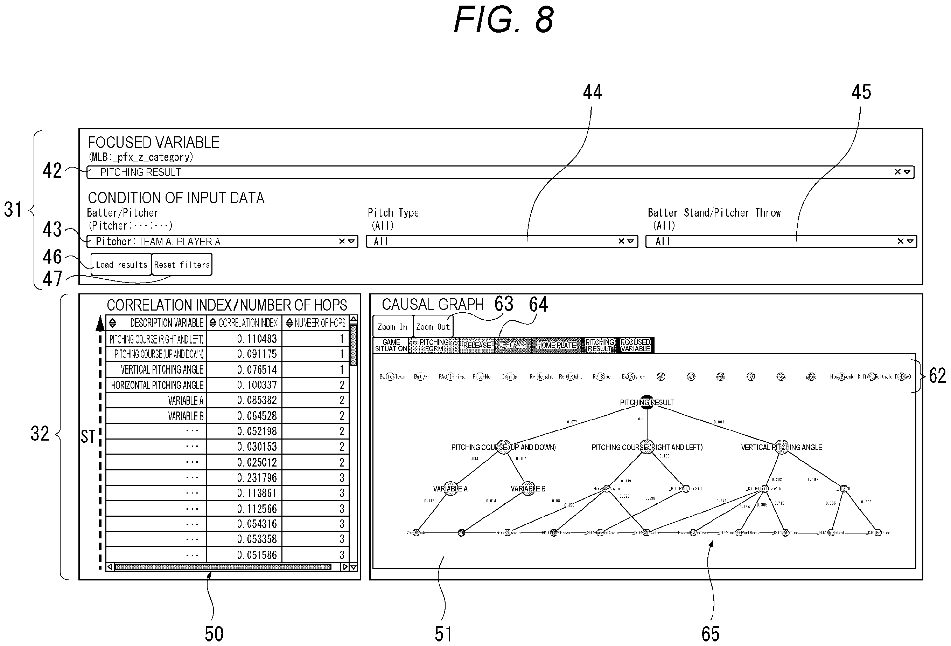

The contribution presentation unit 32 in Fig. 4 displays the result of the contribution calculation processing loaded by the operation of the above load button 46. For example, as illustrated in Fig. 8, an input variable list 50 and a causal graph unit 51 are displayed.

In the input variable list 50, the input variables are presented in descending order of the contribution to the focused variable. As indicated by an arrow ST, an input variable having a high contribution is displayed above the list.

For example, input variables such as a "pitching course (right and left)", a "pitching course (up and down)", and a "vertical pitching angle" are displayed in order with respect to a focused variable such as a "pitching result".

For each input variable, a correlation index (Correlation Metrics) related to the contribution and the number of hops are displayed. The number of hops represents a direct association (one hop) and an indirect association (two hops or more) between variables. The number of hops is represented in an overhead view in the causal graph unit 51.

The input variable list 50 can be sorted by using an absolute value of a correlation index, a mutual information amount, and the like.

In the causal graph unit 51, an unrelated variable list 62, a zoom-in/out button 63, a variable type 64, and an analysis result network model 65 are displayed.

In the unrelated variable list 62, input variables that do not contribute to the focused variable are presented. The variable name is displayed with characters so that one mark of "○" is superimposed on the mark of "○" which is one input variable. Thus, the user can easily confirm the input variable irrelevant to the currently set focused variable.

The variable type 64 represents a type of an input variable represented by a mark "○" in the unrelated variable list 62 and the analysis result network model 65. For example, the type is set as a variable related to the game situation, a variable related to the pitching form, and a variable related to the release.

In the drawing, the mark of "○" is expressed by hatching, filling, or the like, but in practice, it is conceivable to express each input variable as a mark of a different color for each type. The variable type 64 indicates the type of the input variable in a color assigned to the type.

A zoom-in/out button 63 is an operation element for enlarging/reducing the display of the analysis result network model 65.

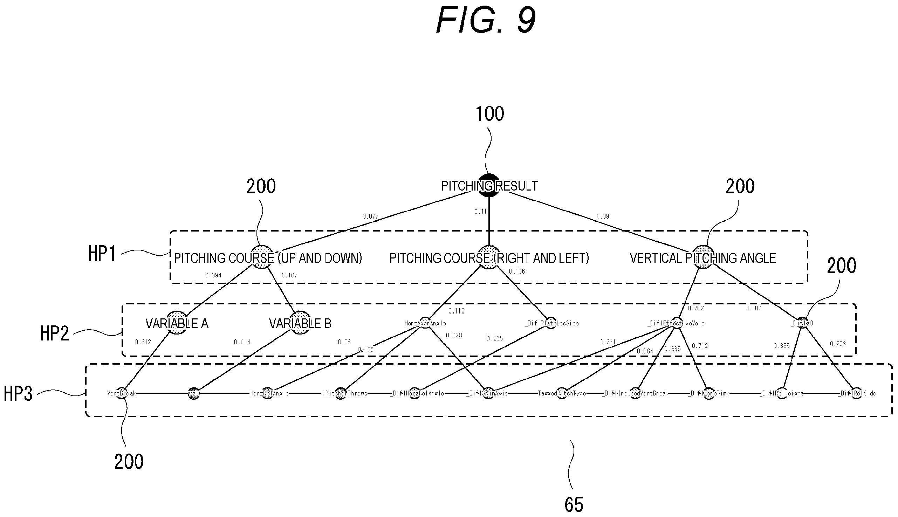

The analysis result network model 65 is illustrated in an enlarged manner in Fig. 9.

The analysis result network model 65 hierarchically illustrates an input variable mark 200 indicating other input variables for each hop count with the vertex as a focused variable mark 100.

The focused variable mark 100 and each input variable mark 200 are indicated by a mark of "○", and a variable name is displayed by superimposed characters. The color of "○" of the focused variable mark 100 and each input variable mark 200 is a color for each type indicated by the variable type 64.

An input variable directly contributing to the focused variable is indicated by an input variable mark 200 enclosed as a first hop HP1.

The input variable mark 200 of the first hop HP1 is an input variable that directly contributes to the focused variable, and is displayed by being connected to the focused variable mark 100 by a line.

In addition, the contribution (correlation coefficient) is expressed by the thickness of the line between the marks.

In addition, a numerical value of the contribution (correlation coefficient) is displayed corresponding to the line between the marks.

Thus, the input variable of the number of hops "1" directly contributing to the focused variable can be easily confirmed, and the contribution of each input variable can be intuitively grasped. Note that the display of the line between the marks is not limited to the display in which the line between the marks becomes thicker as the contribution is higher. For example, different display modes may be used such as displaying a line between marks having the highest contribution as a solid line, and displaying a line between marks having the second and subsequent degrees of contribution as a dotted line.

The input variable mark 200 enclosed as a second hop HP2 indicates an input variable of the number of hops "2" indirectly contributing to the focused variables.

These input variable marks 200 are connected to the input variable mark 200 of the number of hops "1", and the degree of relevance to the input variable of the number of hops "1" is indicated by the thickness of the line and the numerical value.

An input variable mark 200 enclosed as a third hop HP3 indicates an input variable of the number of hops "3" indirectly contributing to the focused variables.

These input variable marks 200 are connected to the input variable mark 200 of the number of hops "2", and the degree of relevance to the input variable of the number of hops "2" is indicated by the thickness of the line and the numerical value.

In Fig. 9, the third hop HP3 of the hop count "3" is illustrated, but the number of hops "4" or more may be further displayed.

With such an analysis result network model 65, the input variable directly or indirectly contributing to the focused variable can be looked down.

In addition, information of individual input variables listed in the analysis result network model 65 is indicated in the input variable list 50 on the left side. Therefore, the user can confirm in detail, on the input variable list 50, each of the input variables whose relevance is grasped in an overhead view by the analysis result network model 65.

Conversely, in the input variable list 50, only the causal relationship of an individual input variable with respect to the focused variable is known, but the relationship with other input variables can be intuitively understood by the analysis result network model 65 in addition to the relationship such as the direct relevance and the indirect relevance between the focused variable and the input variable.

As described above, the input variable list 50 and the analysis result network model 65 have a function of complementarily presenting the result of the contribution calculation processing.

The related chart display unit 33 in Fig. 4 displays various charts using the focused variable and the input variable automatically selected according to a calculation result of the contribution to the focused variable.

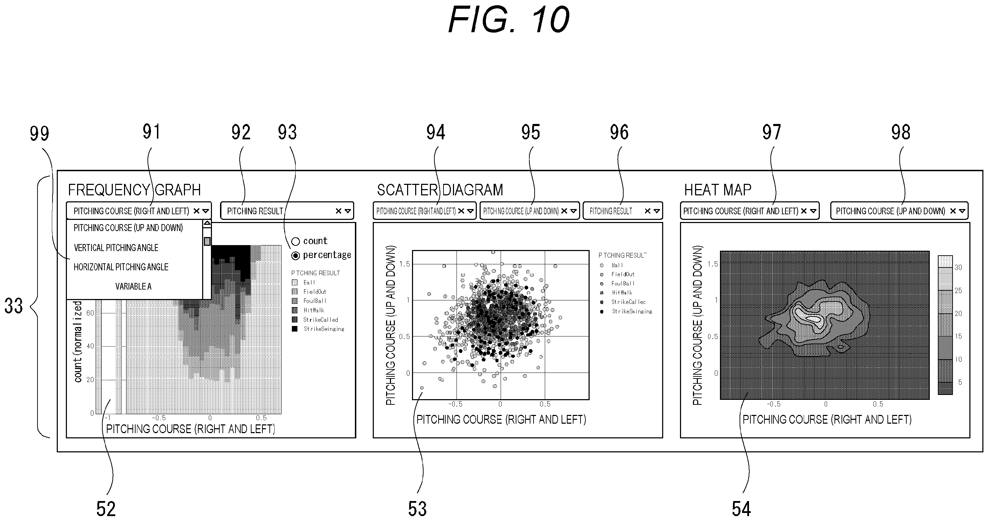

For example, as illustrated in an enlarged manner in Fig. 10, a frequency graph 52, a scatter diagram 53, and a heat map 54 are displayed.

First, the frequency graph 52 will be described.

In the area of the frequency graph 52, a first input variable field 91, a focused variable field 92, and a display method field 93 are provided. For each of these fields, input contents can be selected by a pull-down menu.

The input variable having the highest contribution to the focused variable is automatically input to the first input variable field 91.

The input variable indicated in the first input variable field 91 is assigned to the X-axis of the frequency graph 52. The Y axis is a numerical value indicating frequency.

The focused variable is automatically input to the focused variable field 92.

In the frequency graph 52, the frequency corresponding to the input variable on the X-axis is indicated by the numerical value of the focused variable and color-coding for each category.

For example, in the case of Fig. 10, since the focused variable is the "pitching result", "ball", "field-out", "foul", "hit", "strike looking", and "swing and a miss" are color-coded as data of the pitching result (in this case, the category since it is the categorical variable), and are reflected by the colors assigned to each of them in the frequency graph 52.

In this case, since the X-axis, that is, the first input variable field 91 is the "pitching course (left and right)", the center of the X-axis is, for example, the center of the home plate, and the left and right sides of the X-axis correspond to the left and right positions from the center of the home plate.

For example, it is a diagram in which it can be seen that the frequency at which the pitching result is "ball" increases toward both left and right sides, and the frequency of "hit" increases toward the center.

Fig. 10 illustrates a pull-down menu 99 in the first input variable field 91. The user can arbitrarily change the input variable of the first input variable field 91 by selecting from the pull-down menu 99.

In the pull-down menu 99, other input variables are displayed in descending order of the contribution to the focused variable.

For example, in a state where the input variable having the highest contribution is displayed in the first input variable field 91, the second and subsequent input variables of the contribution to the focused variable are arranged in order from the top and can be selected in the pull-down menu 99.

When the user selects any input variable from pull-down menu 99, the input variable of first input variable field 91 is changed. That is, the X-axis of the frequency graph 52 is changed, and the content of the frequency graph 52 is updated.

Thus, the user can initially see the relationship between the input variable having the highest contribution and the focused variable automatically input to the first input variable field 91, but can also arbitrarily display the frequency graph 52 for another input variable and the focused variable.

At this time, since the pull-down menu 99 is arranged in order of contribution, it is suitable to display the frequency graph 52 that is significant for the analysis that the user desires to perform. For example, when the input variables are arranged in a fixed order in the pull-down menu 99, it is difficult for the user to understand to which input variable the input variable is to be changed. However, when the input variables are arranged in the order of the contribution, it is suitable for the analysis purpose to select the input variable at the upper level in the pull-down menu 99.

Note that, although not illustrated, a pull-down menu is also prepared for the focused variable field 92, and the user can change the focused variable by the pull-down menu. The frequency graph 52 is also updated as the content of the focused variable field 92 is changed. For example, the numerical value or the category of the selected input variable is color-coded and updated to indicate the frequency relationship with the input variable of the first input variable field 91 of the X-axis.

Therefore, the user can view the frequency graph 52 between the input variable of the first input variable field 91 and the input variable input to the focused variable field 92 instead of the focused variable by changing the focused variable to another input variable.

Such a function can be used in a case where, for example, after confirming the frequency graph 52 of the focused variables and the input variable of the number of hops "1" having the highest contribution, it is desired to see the frequency graph 52 of the input variable of the number of hops "2" related to the input variable.

In the frequency graph 52, the user can arbitrarily switch the display mode between count display and percentage display by selecting the display method field 93 (selection by a pull-down menu not illustrated).

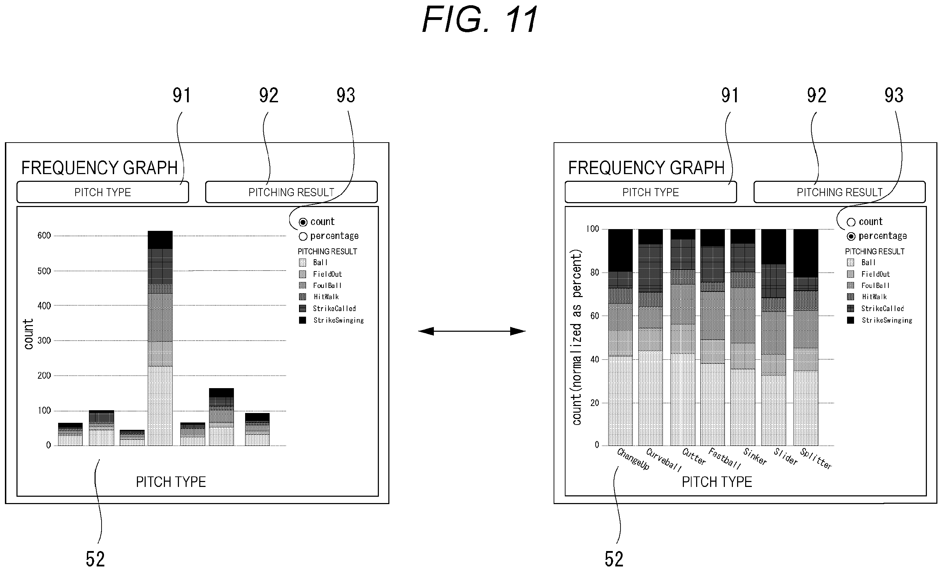

The left diagram of Fig. 11 illustrates a case where the count display is performed. Note that, in Fig. 11, the first input variable field 91 is the "pitch type", and the focused variable field 92 is the "pitching result". In this case, "change-up", "curve", and the like, which are the categories of the pitch types, are assigned to the X-axis, and the Y-axis indicates the actual number of times. That is, the number of times each pitch type is thrown and the pitching result are displayed.

On the other hand, the right diagram in Fig. 11 illustrates a case where the percentage is displayed. The Y-axis is assumed to indicate the percentage. That is, the percentage of the pitching result is displayed for each pitch type.

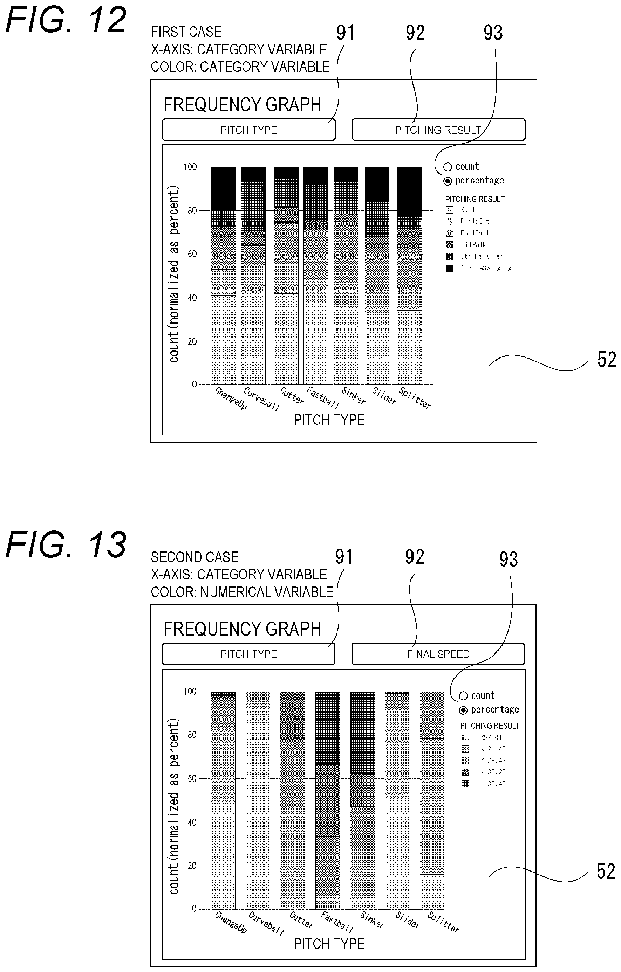

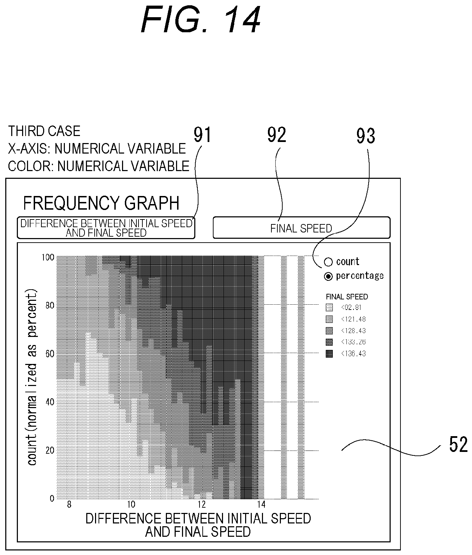

In the frequency graph 52 described above, the first case of Fig. 12, the second case of Fig. 13, and the third case of Fig. 14 are assumed depending on the data type of the variable input to the first input variable field 91 and the focused variable field 92, that is, whether it is a numerical variable or a categorical variable.

The first case of Fig. 12 is a case where the first input variable field 91 (X-axis) is a categorical variable such as "pitch type", and the focused variable field 92 (color-coded) is also a categorical variable such as "pitching result".

Since the input variable of the first input variable field 91 is the X-axis, the category of the input variable is assigned to the X-axis.

The focused variables (or input variable) in the focused variable field 92 is expressed by color-coding the category of the variable.

Therefore, in the frequency graph 52, each category of the focused variable is color-coded and displayed with respect to the category assigned to the X-axis.

The second case of Fig. 13 is a case where the first input variable field 91 (X-axis) is a categorical variable such as "pitch type", and the focused variable field 92 (color-coding) is a numerical variable such as "final speed". The "final speed" is a speed of a ball on the home plate.

Since the input variable of the first input variable field 91 is the X-axis, the category of the input variable is assigned to the X-axis.

As for the focused variables (or input variable) in the focused variable field 92, the numerical value of the variable is classified into a plurality of stages and color-coded. For example, in the case of the final speed in the drawing, the speed range is divided and color-coded such as "less than 92.81 km/h" "92.81 km/h or more and less than 121.48 km/h"....

Therefore, in the frequency graph 52, the levels of the respective numerical values of the focused variables are color-coded and displayed with respect to the category assigned to the X-axis.

Furthermore, the division of the numerical range in each stage of the plurality of stages is determined according to the number of divisions determined in advance according to the user input or the like. For example, there are a method of dividing by a percentile value so that the number of samples (the number of pitches in Fig. 13) is evenly included in each stage, a method of dividing at equal intervals so that the number of divisions becomes a predetermined number on the basis of the maximum value and the minimum value, and the like.

The third case of Fig. 14 is a case where the first input variable field 91 (X-axis) is a numerical variable such as "difference between initial speed and final speed", and the focused variable field 92 (color-coded) is a numerical variable such as "final speed". The "initial speed" is a ball speed immediately after release. The "final speed" is a ball speed at the time when the catcher catches the ball.

Since the input variable of the first input variable field 91 is the X-axis, a numerical value of the input variable is assigned to the X-axis.

As for the focused variables (or input variable) in the focused variable field 92, the numerical value of the variable is classified into a plurality of stages and color-coded.

Therefore, in the frequency graph 52, the levels of the numerical values of the focused variables are color-coded and displayed with respect to the numerical values assigned to the X-axis.

Furthermore, the division of the numerical range in each stage of the plurality of stages is determined according to the number of divisions determined in advance according to the user input or the like. For example, there are a method of dividing by a percentile value so that the number of samples (the number of pitches in Fig. 14) is evenly included in each stage, a method of dividing at equal intervals so that the number of divisions becomes a predetermined number on the basis of the maximum value and the minimum value, and the like.

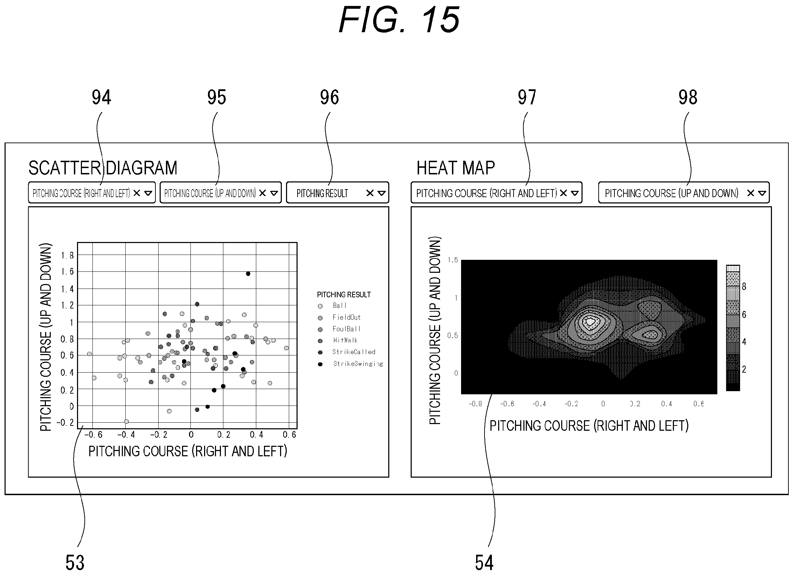

Next, the scatter diagram 53 and the heat map 54 displayed on the related chart display unit 33 will be described. Fig. 15 illustrates the scatter diagram 53 and the heat map 54 in an enlarged manner.

The scatter diagram 53 is provided with a first input variable field 94, a second input variable field 95, and a focused variable field 96.

The input variable having the highest contribution to the focused variable is automatically input to the first input variable field 94. An input variable having the second highest contribution to the focused variable is automatically input to the second input variable field 95.

The input variable indicated in the first input variable field 94 is assigned to the X-axis of the scatter diagram 53, and the input variable indicated in the second input variable field 95 is assigned to the Y-axis of the scatter diagram 53.

The focused variable is automatically input to the focused variable field 96.

The scatter diagram 53 is a diagram in which each pitch is plotted on the X-Y coordinate by the numerical value of the focused variable and color-coding for each category.

For example, in the case of Fig. 15, since the focused variables is the "pitching result", it is color-coded according to the data of the pitching result (in this case, since it is a categorical variable, it is categorical). Each of the pitches is plotted on the X-Y coordinate and displayed by one mark of "○", and the category is represented by the color of "○".

Further, in this example, the X-axis is the "pitching course (left and right)" and the Y-axis is the "pitching course (up and down)", and for example, numerical values indicating the horizontal position and the height position on the home plate are the X-axis and the Y-axis. Thus, the tendency of the pitching course for the pitching result is illustrated in the chart.

Also in the scatter diagram 53, the user can change the contents of the first input variable field 94, the second input variable field 95, and the focused variable field 96 using a pull-down menu (not illustrated). The scatter diagram 53 is updated by changing the field contents. Thus, the user can set any input variable and confirm the scatter diagram.

The heat map 54 is provided with a first input variable field 97 and a second input variable field 98.

The input variable having the highest contribution to the focused variable is automatically input to the first input variable field 97. An input variable having the second highest contribution to the focused variable is automatically input to the second input variable field 98.

An input variable indicated in the first input variable field 97 is assigned to the X-axis of the heat map 54, and an input variable indicated in the second input variable field 98 is assigned to the Y-axis of the heat map 54.

Therefore, in the heat map 54, the same input variables as those in the scatter diagram 53 are set for the X-axis and the Y axis.

The heat map 54 indicates an occurrence frequency by shading or a difference in color. In this case, the focused variable is plotted in the scatter diagram 53, but in the heat map 54, the density of pitches plotted on the same X-Y coordinate, that is, the occurrence frequency is represented by a difference in color or shading.

In the case of the scatter diagram 53, since the "○" mark is plotted as one pitch, pitches of the same course overlap at the same position, and it is difficult to understand the occurrence frequency. By using this as the heat map 54, the occurrence frequency (for example, the occurrence frequency of the number of pitches for each course) can be easily understood.

The input variables of the first input variable field 97 and the second input variable field 98 of the heat map 54 can also be selected from a pull-down menu (not illustrated). The heat map 54 is updated according to the selection.

Note that the input variables of the X-axis and the Y-axis of the scatter diagram 53 and the heat map 54 may be changed in conjunction with each other. For example, when the first input variable field 94 is changed in the scatter diagram 53, the first input variable field 97 of the heat map 54 may also be changed in synchronization. In this way, the correspondence relationship between the scatter diagram 53 and the heat map 54 is automatically maintained, and both diagrams can be easily compared.

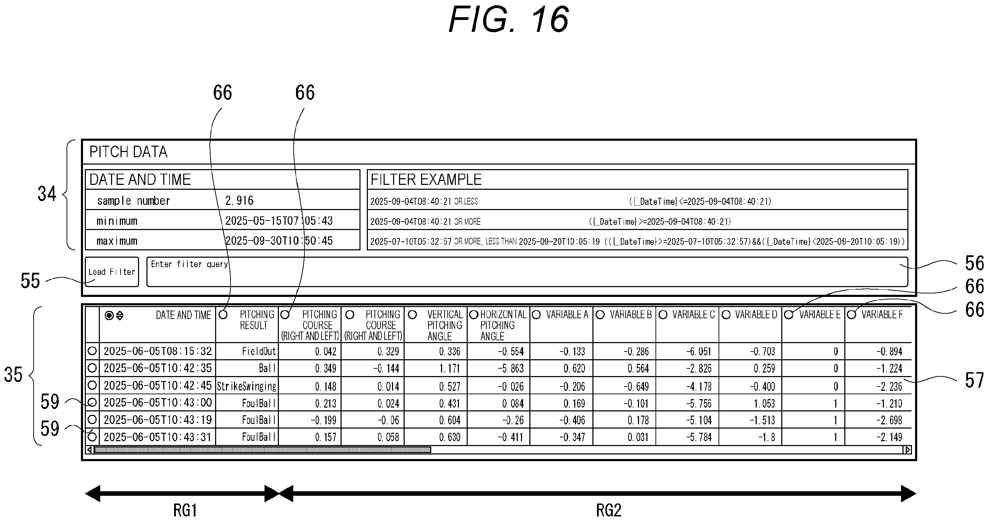

Next, the pitch data filtering unit 34 and the pitch data unit 35 in Fig. 4 will be described. Fig. 16 is an enlarged view.

The pitch data filtering unit 34 is an area in which filter setting of a target pitch is performed. Therefore, for example, a list of date and time and a filter example are displayed, and the user can determine a filter condition with reference to the list and the filter example. The date and time is, for example, the date and time of a game. The filter example describes an example of extracting a range of pitching.

The user inputs the filter condition in the condition field 56 with reference to these. The pitch data is extracted according to the filter condition by operating a filter button 55.

A pitch data table 57 indicating the content of each pitch is displayed in the pitch data unit 35. In the pitch data table 57, one pitch is defined as one row, and a pitch selection button 59 and actual data of various input variables are displayed for each pitch.

Here, for each pitch indicated by one row, variables are fixedly set in the first two columns indicated by an arrow RG1. That is, "date and time" is indicated in the first column, and the focused variable is arranged in the second column. In the example of Fig. 16, the "pitching result" used as the focused variable is displayed.

In the third and subsequent columns indicated by an arrow RG2, the actual data of the other input variables are displayed, and the order of the input variables is arranged in the descending order of the contribution to the focused variable. Thus, the actual data value of the input variable to be referred to with respect to the focused variable can be easily seen for each pitch.

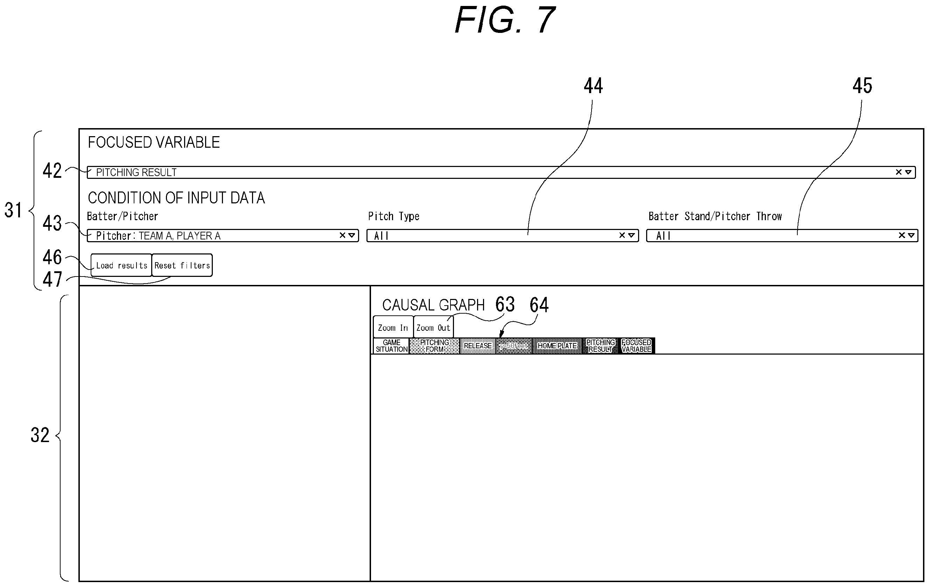

Such a pitch data table 57 initially indicates a pitch that meets the condition setting by the condition fields 43, 44, and 45 of the focused variable setting unit 31 in Fig. 7. For example, in the condition fields 43, 44, and 45, if conditions of "against left-handed batters" of "all pitch types" of "pitcher A" are set, initially, all pitches corresponding to this condition are displayed in the pitch data table 57.

In that case, the user can narrow down the displayed pitches by setting a condition in the pitch data filtering unit 34. For example, when the condition of the game on May 3 is input to the condition field 56 and the filter button 55 is operated, the pitching is narrowed down to the pitching of "batting against left-handed batters" of "all pitch types" of "pitcher A" in the game on May 3.

In a case where such filtering is performed, each chart in the related chart display unit 33 is also updated. In other words, while the frequency graph 52, the scatter diagram 53, and the heat map 54 are initially charts generated for all data under the condition of "against left-handed batters" of "all pitch types" of "pitcher A", if filtering is performed under the condition of the game on May 3, the charts are updated to charts for data of pitches of "against left-handed batters" of "all pitch types" of "pitcher A" in the game on May 3.

Thus, the user can further narrow down the range to be checked within the settings of the condition fields 43, 44, and 45 and view the chart such as the frequency graph 52. For example, when the scatter diagram 53 and the heat map 54 are initially in the state of Fig. 10, the number of samples decreases as illustrated in Fig. 15 according to the result of narrowing by filtering in the pitch data filtering unit 34.

Note that the content of the contribution presentation unit 32 is not changed even if the filtering by the pitch data filtering unit 34 is performed. This is because the contribution presentation unit 32 is an area for displaying the result of the contribution calculation processing.

The pitch data table 57 is provided with the pitch selection button 59 for each pitch (one row), but the user can present information about the pitch by operating the pitch selection button 59. For example, as illustrated in Fig. 5, the clip image 58 for the selected pitch may be reproduced.

A variable selection button 66 is provided for each variable in the pitch data table 57. In a case where the variable selection button 66 is operated, information (number of samples, maximum value, minimum value, category name, and the like) of the variable and an example of the filter condition are displayed as a filter example of the pitch data filtering unit 34.

### <4. First processing example>

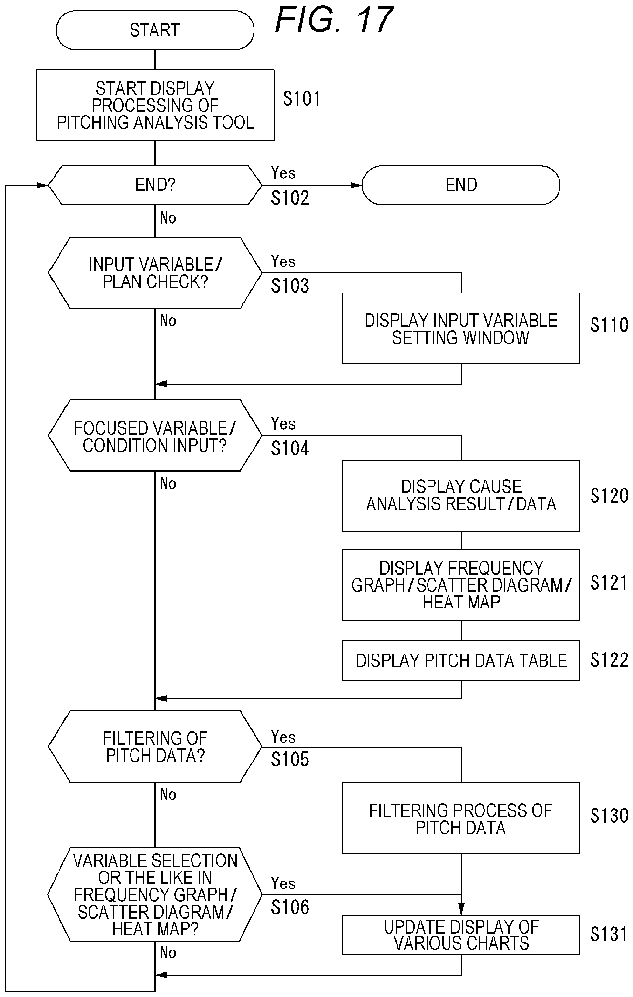

A processing example of the server device 2 for displaying the UI image as described above will be described with reference to Fig. 17. The processing described below is mainly processing by the functions of the calculation unit 21 and the presentation control unit 22 in the server device 2. In a case where the information processing device 70 in Fig. 3 functions as the server device 2, the processing is performed by the CPU 71.

In step S101, the server device 2 starts the display processing of the above UI image as the pitching analysis tool. For example, the server device 2 performs control to cause the terminal device 5 to display an image as illustrated in Fig. 7. This is a display in a state in which the focused variable is not yet selected by the user.

Note that the focused variable may be automatically selected in the initial stage, and the display of each unit as illustrated in Fig. 4 may be performed using the default focused variable from the beginning of the display.

After starting the display of the UI image, the server device 2 loops the confirmation processing from step S102 to step S106.

In step S102, the display end of the UI image is confirmed. In a case where a trigger for ending the display of the UI image is detected by a user operation, a mode change, or the like, the server device 2 ends the processing of Fig. 17.

During a period until the display ends, the confirmation processing from step S103 to step S106 is executed.

In step S103, the server device 2 checks the input variable/plan confirmation request. That is, it is checked whether or not the user has operated the input variable button 41 in the input variable setting unit 30. In a case where the operation of the input variable button 41 is confirmed, the server device 2 proceeds to step S110, and performs control to display the input variable setting window 60 as illustrated in Fig. 6 on the display unit 5a of the terminal device 5. In this case, display of detailed contents, plan change setting, and the like are also performed according to the user's operation.

When the display of the input variable setting window 60 is closed, the server device 2 returns to the confirmation loop.

In step S104, the server device 2 checks whether or not the focused variable and the condition are input. This is confirmation that the focused variable field 42 and the condition fields 43, 44, and 45 are input in the focused variable setting unit 31 and the load button 46 is operated.

In a case where the input of the focused variable or the like and the operation of the load button 46 are detected, the server device 2 proceeds to step S120, and performs control to execute the contribution calculation processing and display the contribution calculation processing result. That is, the contribution calculation processing is performed in the range of input data designated by the condition fields 43, 44, and 45 for the focused variable set at the time of operating the load button 46, and the contribution to the focused variable is calculated for each of the other input variables.

Then, on the basis of the calculation result, the images of the input variable list 50 and the causal graph unit 51 are displayed on the terminal device 5.

Subsequently, in step S121, the server device 2 automatically selects input variables to be input to the first input variable fields 91, 94, and 97 on the basis of the result of the contribution calculation processing, and automatically selects input variables to be input to the second input variable fields 95 and 98. Then, the server device 2 generates chart data of the frequency graph 52, the scatter diagram 53, and the heat map 54, and causes the terminal device 5 to display the chart data.

In step S122, the server device 2 causes the terminal device 5 to display the pitch data table 57 in the range of the input data designated in the condition fields 43, 44, and 45.

As described above, the initial UI image at the time of operating the load button 46 is displayed on the terminal device 5 as illustrated in Fig. 4.

In the period in which such display is performed, each processing from step S102 to step S106 is continuously looped.

When the focused variable and the condition are changed in step S104, the display content of Fig. 4 is entirely updated by the processing of steps S120, S121, and S122.

In addition, a part may be updated in accordance with the confirmation in step S105 or step S106.

In step S105, the server device 2 monitors the filtering operation of the pitch data. That is, it is confirmed that the user inputs the filter condition in the condition field 56 and operates the filter button 55.

When detecting the operation of the filter button 55, the server device 2 proceeds to step S130, performs a filtering process of the pitch data, and updates the pitch data table 57.

In this case, the processing further proceeds to step S131, and the server device 2 updates the contents of the frequency graph 52, the scatter diagram 53, and the heat map 54 so as to reflect the data within the range narrowed down in the pitch data table 57, and performs control to display the updated diagrams.

In step S106, the server device 2 checks whether or not variable selection or the like in the frequency graph 52, the scatter diagram 53, and the heat map 54 has been performed. That is, it is a confirmation that the contents have been changed by selection using a pull-down menu in any of the first input variable fields 91, 94, and 97, the second input variable fields 95 and 98, the focused variable fields 92 and 96, and the display method field 93.

In a case where variable selection or the like of these fields is performed, the server device 2 proceeds to step S131, and performs control to update the display content of any necessary chart among the frequency graph 52, the scatter diagram 53, and the heat map 54, and display the updated chart.

For example, the above-described processing of Fig. 17 is performed by the server device 2, whereby the UI image as illustrated in Fig. 4 is displayed on the terminal device 5, and the display content is updated according to the operation of the user.

### <5. Second processing example>

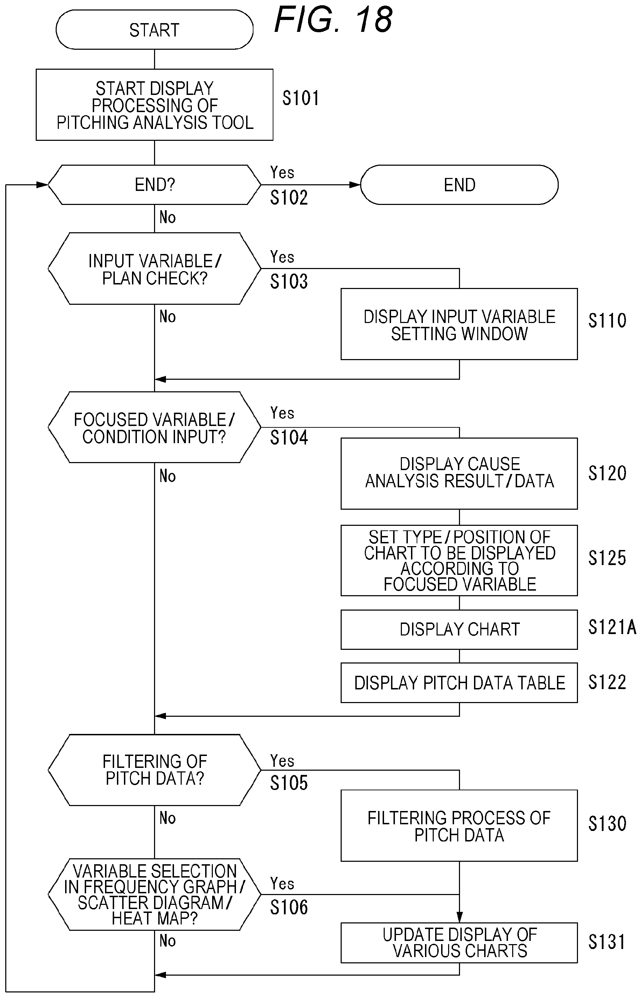

Fig. 18 illustrates a second processing example of the server device 2. Note that the same processes as those in Fig. 17 are denoted by the same step numbers, and redundant description is avoided.

The processing of Fig. 18 is different from that of Fig. 17 in that step S125 is added.

In a case where the user operates the load button 46 and the server device 2 performs the contribution calculation processing in response to the operation, processing of setting the type and arrangement of the chart to be displayed is performed in step S125 according to the current focused variable.

For example, the frequency graph 52, the scatter diagram 53, and the heat map 54 are displayed as a chart, but there may be a chart that does not give much meaning depending on the focused variables. Alternatively, diagrams of other species may be more appropriate.

Therefore, the server device 2 selects a chart to be displayed in step S125, and also sets an arrangement position and the like of the chart.

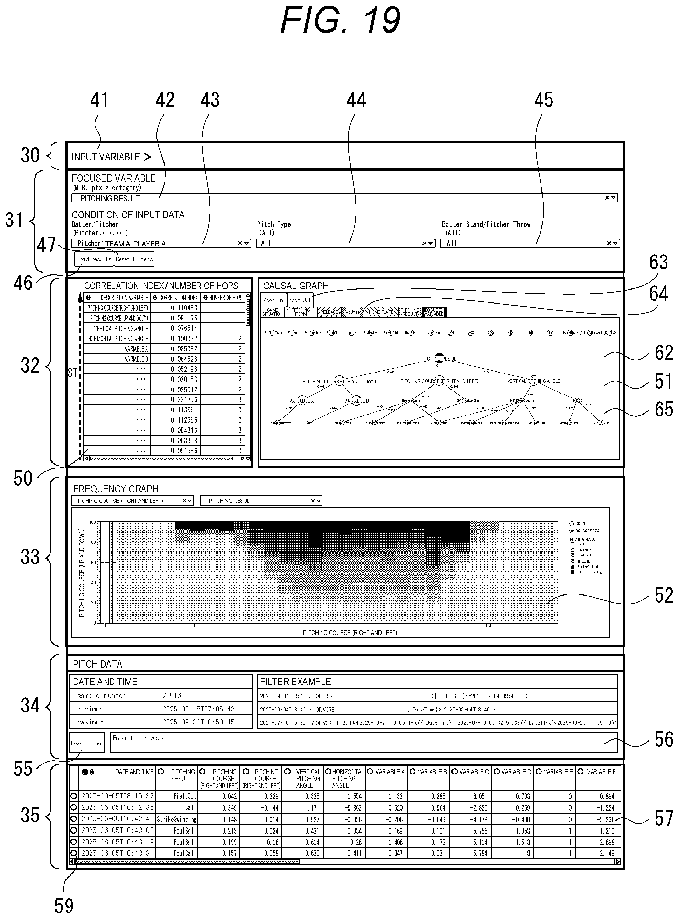

Then, in step S121A, the server device 2 performs display control of the selected chart. For example, Fig. 19 illustrates an example in which only the frequency graph 52 is displayed in the case of a certain focused variables.

As in the second processing example, by selecting the type of chart to be displayed according to the focused variables, it is possible to implement display of a chart optimized for each focused variable.

Not only the type of the chart but also the arrangement order, the display size, and the like may be changed according to the focused variable.

In addition, the type, position, and the like of the chart may be selected for not only the focused variables but also a combination with the input variable having a large contribution.

### <6. Another example and processing example of user interface image>

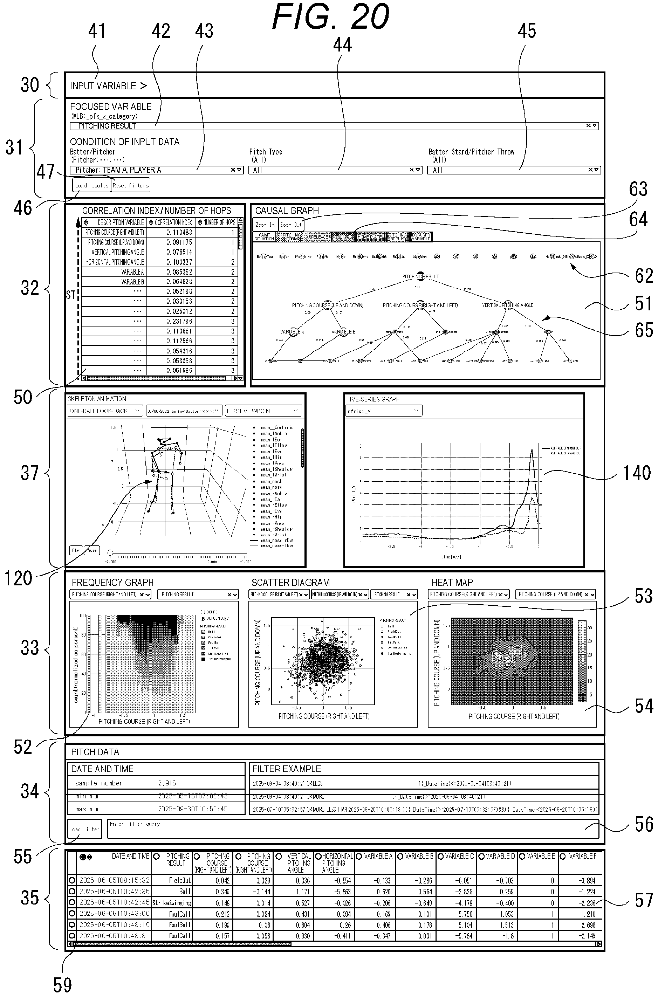

Fig. 20 illustrates another example of the UI image provided from the server device 2 to the terminal device 5. Note that the same portions as those in Fig. 4 are denoted by the same reference numerals, and description thereof will be omitted.

The example of Fig. 20 is an example in which a motion display unit 37 is provided in addition to or instead of the input variable setting unit 30, the focused variable setting unit 31, the contribution presentation unit 32, the related chart display unit 33, the pitch data filtering unit 34, the pitch data unit 35, and the clip display unit 36 illustrated in Figs. 4 and 5.

The motion display unit 37 is divided into an animation unit 120 and a graph unit 140.

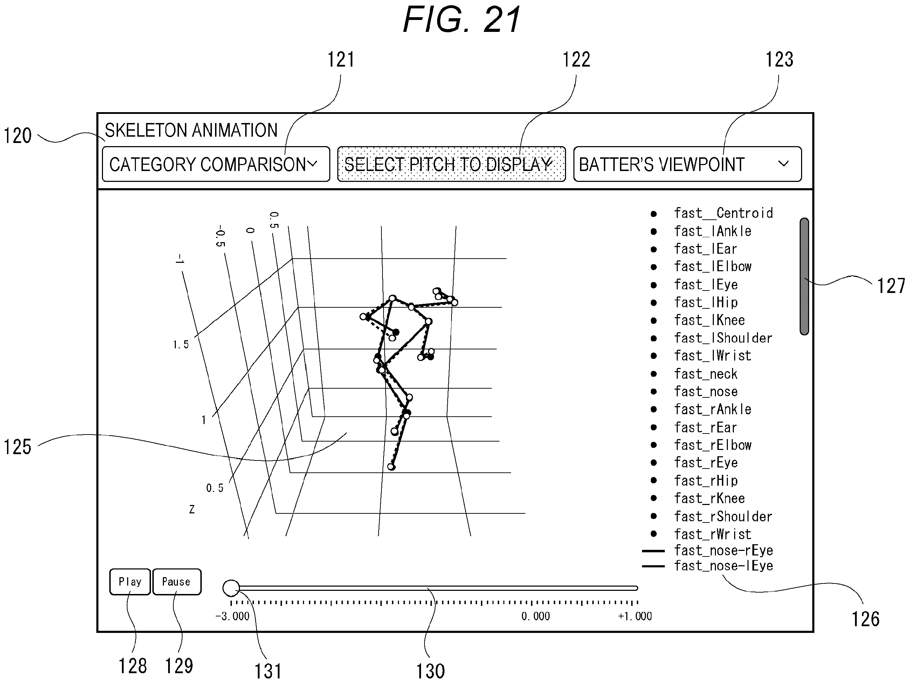

The animation unit 120 will be described with reference to Figs. 21, 22, and 23.

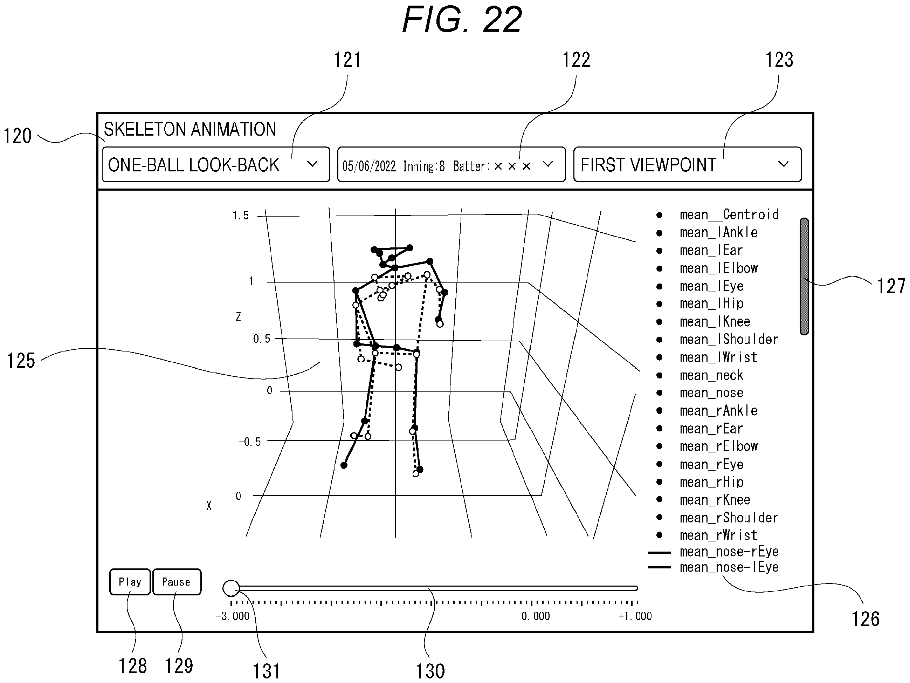

Note that the display of the animation unit 120 includes two modes of a category comparison mode and a one-ball look-back mode. Fig. 21 is a display example in the case of the category comparison mode, and Fig. 22 is a display example in the case of the one-ball look-back mode.

As illustrated in Figs. 21 and 22, the animation unit 120 is provided with a mode field 121, a pitch selection field 122, and a viewpoint field 123. In addition, a skeleton animation 125, a legend 126, a scroll bar 127, a play button 128, a pause button 129, a seek bar 130, and a pointer 131 are displayed.

The mode field 121 is a field in which the user can select the category comparison mode and the one-ball look-back mode by, for example, a pull-down menu. Note that initially, for example, the category comparison mode is selected.

The pitch selection field 122 is a field for selecting a specific pitch in the one-ball look-back mode, that is, a pitch to be checked by looking back. For example, it can be selected from a pull-down menu. For example, each pitch in the pitch data table 57 may be selected depending on the pull-down menu.

The viewpoint field 123 is a field for selecting a viewpoint position with respect to the skeleton animation 125. For example, it is possible to select different viewpoint positions as positions with respect to the pitcher, such as a batter's viewpoint, a first-base viewpoint, a second-base viewpoint, and a third-base viewpoint, from a pull-down menu.

The skeleton animation 125 displays the pitching motion of the pitcher in an animation indicating the skeleton and the positions of joint points in the three-dimensional coordinate space.

As described above, the EPTS pitcher's skeleton data included in the input variable includes information such as the center of gravity at the time of release or before and after release, the position of each joint point, the angle of each joint point, the speed or acceleration of the position of each joint point, and the change in angle.

By using such information, the EPTS data processing unit 21b illustrated in Fig. 2 can generate an animation image of the pitching motion by the skeleton model of the pitcher. The presentation control unit 22 provides such information of the animation image to the display unit 5a and causes the display unit 5a to display the information.

The skeleton animation 125 is an image representing a skeleton model by displaying the positions of joints and body parts (• or O on the drawing) and a line connecting these (solid line or broken line on the drawing). In the example of the drawing, a skeleton model indicated by • and a solid line and a skeleton model indicated by O and a broken line are illustrated in an overlapping manner. In practice, they may be displayed in different display modes (for example, different colors). For example, the skeleton model of • and the solid line is blue, and the skeleton model of O and the broken line is red.

For the sake of explanation, a skeleton model indicated by • and a solid line is referred to as a first skeleton model, and a skeleton model indicated by O and a broken line is referred to as a second skeleton model.

In the case of the category comparison mode of Fig. 21, the first skeleton model and the second skeleton model in the skeleton animation 125 are, for example, skeleton models generated from the average data of each of the top 30% data and the bottom 30% data with respect to the index set as the focused variables.

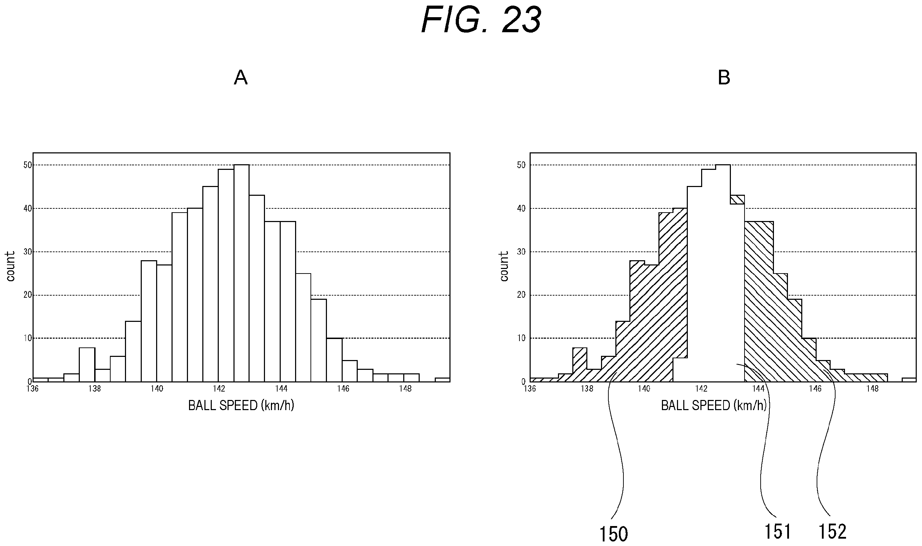

For example, Figs. 23A and 23B illustrate examples in which "ball speed" is used as a focused variable. In Fig. 23A, a horizontal axis represents a ball speed, and a vertical axis represents a count value (the number of pitches). In a case where such data exists, the EPTS data processing unit 21b is divided into a lower 30% data group 150, an intermediate data group 151, and a higher 30% data group 152 as illustrated in Fig. 23B. Then, the EPTS data processing unit 21b generates a 3D animation image of the first skeleton model using, for example, the EPTS data related to each pitch of the higher 30% data group 152. Further, the EPTS data processing unit 21b generates the 3D animation image of the second skeleton model using the EPTS data about each pitch of the lower 30% data group 150. A combination of the animation images of the first skeleton model and the second skeleton model is displayed as the skeleton animation 125.

Therefore, this skeleton animation 125 is divided into two groups, for example, a group with fast ball speed and a group with slow ball speed with respect to the focused variables, and is generated using the EPTS data of each of the groups, so that an image that can express a difference in motion between the two groups can be obtained. In particular, since the positions and relationships of the joint points and the like are expressed by circles and lines, it is possible to confirm what kind of difference is present in the part/movement considered to have a high contribution to the focused variable.

In the legend 126 of Fig. 21, items indicating joint points and the like and lines between joints and the like are listed. For example, • (for example, a blue circle in practice) is a joint point of the first skeleton model, and "fast Centroid", "fast lAnkle", "fast lEar", and the like are indicated. "fast" indicates a group with fast ball speed, that is, a joint point of the first skeleton model, "Centroid" indicates the center of gravity, "lAnkle" indicates the left ankle (first "l" indicates "left"), and "lEar" indicates the left ear.

In addition, a solid line (for example, a blue line in practice) is a line of the first skeleton model, and "fast nose-rEye" is a line connecting the right eye (the first "r" of "rEye" represents "right") from the nose of the first skeleton model.

The contents of the legend 126 can be sent by operating the scroll bar 127, and each of the joint points (positions of O) of the second skeleton model and lines connecting them are also displayed as items. For example, items regarding the second skeleton model are displayed as "slow lAnkle", "slow lEar", ..., "slow nose-rEye", and the like as items with "slow" indicating a group with slow ball speed.

For each item in the legend 126, the user can perform on/off setting by a click operation or the like. For example, when "fast lAnkle" in the legend 126 is clicked in a state where • of the left ankle corresponding to "fast lAnkle" is displayed on the skeleton animation 125, the display of • of the left ankle in the first skeleton model is deleted. When "fast lAnkle" is clicked again, • of the left ankle is displayed.

The skeleton animation 125 is displayed in a state in which the pitcher is viewed from the viewpoint position selected in the viewpoint field 123. For example, Fig. 21 illustrates a state in which a pitcher is viewed from a batter's viewpoint.

By the user performing a drag operation or the like on the skeleton animation 125, the coordinates and the skeleton animation 125 can be rotated. That is, the viewpoint position can be arbitrarily changed without changing the setting of the viewpoint field 123.

The play button 128 is an operation element for a playback start operation of the skeleton animation 125, and the pause button 129 is an operation element for a playback stop operation.

In response to the operation of the play button 128, the moving image reproduction of the skeleton animation 125 is started. For example, the release timing is set to 0.000 seconds, and an animation moving image of about -3 seconds to +1 seconds is reproduced. Thus, the start to the end of the pitching motion can be confirmed by the motion of the skeleton model.

For example, by setting a specific pitcher or pitch type in the condition fields 43 and 44 in the focused variable setting unit 31, data of the pitch type of the pitcher is grouped by ball speed as illustrated in Fig. 23. Then, for the appropriate pitch type of the appropriate pitcher, the first skeleton model and the second skeleton model in the case of fast ball and the case of slow ball are displayed as a moving image in a superimposed state.

Thus, the user can confirm a difference in body part or movement that affects the speed of the ball.

On the seek bar 130, display is performed as if the pointer 131 is moving at the time of moving image reproduction. Thus, it is possible to know which timing before and after release each time point of the moving image is.

Furthermore, for example, when the user moves the pointer 131 in the pose state of the moving image, the frame at the time point indicated by the pointer 131 is displayed in a stopped state in the skeleton animation 125. Thus, the posture of the pitching motion at each timing, the position of the joint, and the like can be easily confirmed.

Note that, although not illustrated in the drawing, slow playback, frame advance playback, and the like of the skeleton animation 125 may be enabled.

In the case of the one-ball look-back mode in Fig. 22, the meanings of the first skeleton model and the second skeleton model of the skeleton animation 125 are different from those in the case of the category comparison mode.

In the case of the one-ball look-back mode, the user selects one ball to look back in the pitch selection field 122. The EPTS data processing unit 21b generates a 3D animation image as the second skeleton model on the basis of the EPTS data of the pitch selected as the one ball to be looked back.

On the other hand, the first skeleton model is, for example, an average value of all data of the corresponding pitch type of the pitcher. An average value of all data of the pitch type of the corresponding pitcher in a game including one ball to be looked back on may be used. The EPTS data processing unit 21b generates a 3D animation image as the first skeleton model by using the average value of the EPTS data such as each joint position and speed of all the corresponding data.

Then, a combination of the animation images of the first skeleton model and the second skeleton model in a superimposed manner is displayed as the skeleton animation 125.

Thus, by moving the skeleton animation 125 by the operation of the play button 128, the user can confirm one ball that attracts the attention of a certain pitcher together with the average form of the pitcher.

The operation and function of the pause button 129 and the seek bar 130 are similar to those in the category comparison mode.

Therefore, it is possible to verify that a pitching form in a case where a certain pitcher throws a ball very effectively to a batter or makes a careless pitch is compared with an average pitching form of the pitcher.

In the case of the one-ball look-back mode, the items in the legend 126 are presented as, for example, "mean" indicating an average value for the first skeleton model, "target" indicating a specific pitch (target pitch) to be looked back on for the second skeleton model, and "mean fast Centroid", "mean fast lAnkle",..., "mean nose-rEye",..., "target fast Centroid", "target fast lAnkle",..., "target nose-rEye", and the like.

By clicking these items, the user can turn on/off display of joint points and lines in the skeleton model.

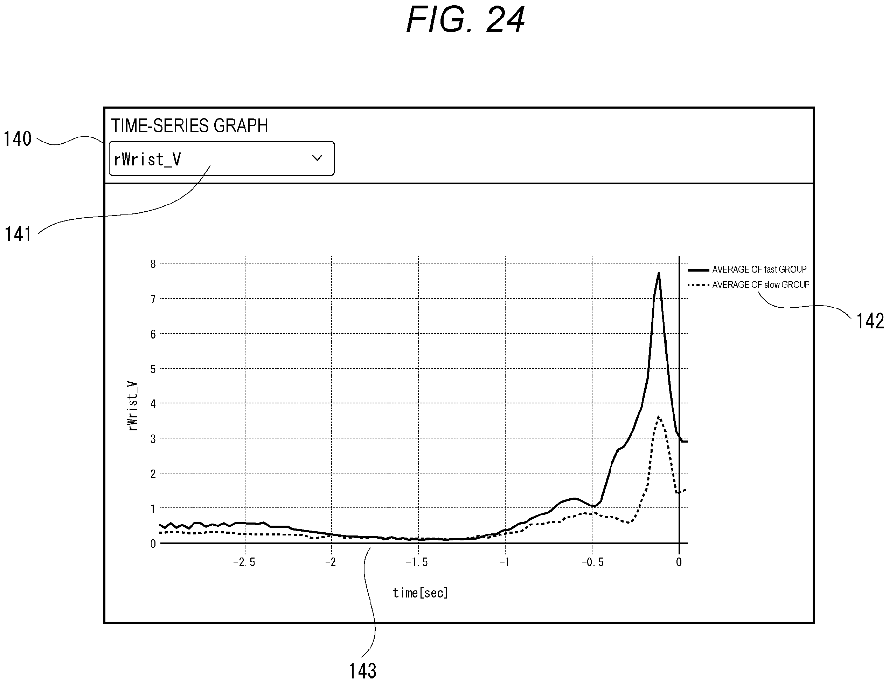

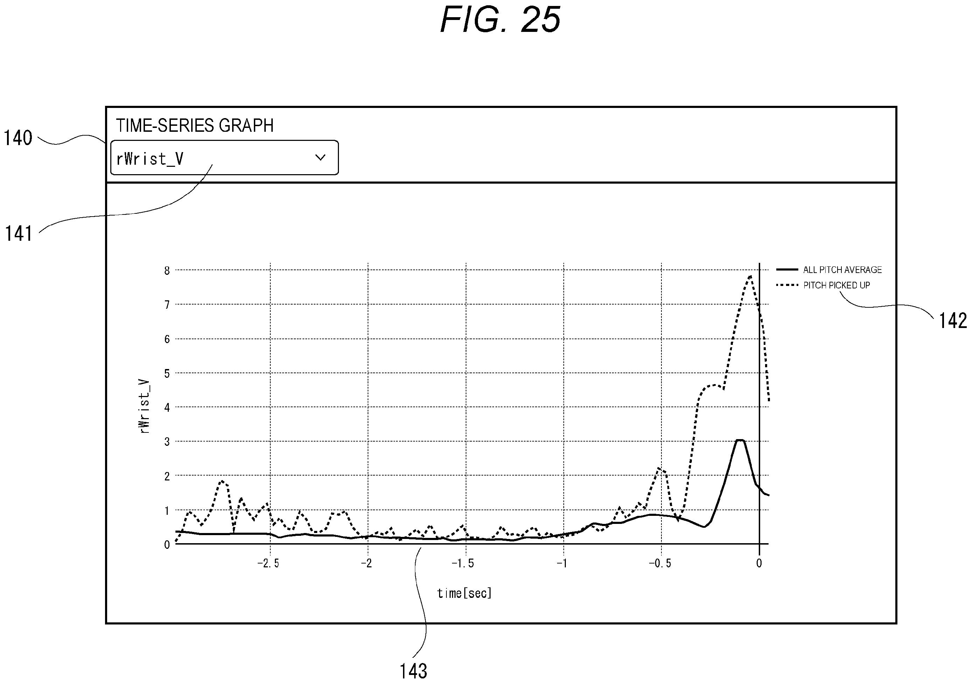

Next, the graph unit 140 will be described. Fig. 24 is a display example of the graph unit 140 in the case of the category comparison mode, and Fig. 25 is a display example of the graph unit 140 in the case of the one-ball look-back mode.

In the graph unit 140, the data displayed in the skeleton animation 125 can be confirmed in a time-series graph 143 as time-series information.

In the graph unit 140, a variable field 141, a legend 142, and a time-series graph 143 are displayed.

The variable field 141 is a field in which the user can input any input variable by, for example, a pull-down menu. In the drawing, an example of "rWrist V" is illustrated, and this is a variable of the speed of the right wrist.

The input variable set in the variable field 141 is the vertical axis of the time-series graph 143. The horizontal axis of the time-series graph 143 is time. For example, the release timing is set to 0.000 seconds, and the time before and after the release is indicated.

In the legend 142, the types of lines of two groups corresponding to the first skeleton model and the second skeleton model described above are displayed. In the drawing, although the first skeleton model is indicated by a solid line, and the second skeleton model is indicated by a broken line, it is sufficient if different display modes are used, and color coding such as blue and red lines may be indicated.

In the case of the category comparison mode corresponding to Fig. 21, lines of the group with fast ball speed (fast group) and the group with slow ball speed (slow group) are illustrated as the legend 142 as illustrated in Fig. 24.

In the case of the one-ball look-back mode corresponding to Fig. 22, as illustrated in Fig. 25, the all pitch average and the line of the pitches picked up as the looking back 1 ball are illustrated as the legend 142.

The user can perform on/off setting for the item of the legend 142 by a click operation or the like. For example, when "fast group" is clicked in a state where the graph (first skeleton model) corresponding to "fast group" is displayed on the time-series graph 143 in Fig. 24, the display of the graph corresponding to the first skeleton model is deleted. When "fast group" is clicked again, a graph corresponding to the first skeleton model is displayed.

In the graph unit 140, by changing the input variable of the variable field 141, the time-series change of the input variable can be confirmed. In the case of Figs. 24 and 25, the change in the speed of the right wrist is displayed in the time-series graph 143.

For example, when the variable field 141 is set to "x-axis position of right shoulder", "elbow height", or the like, the time-series graph 143 in which these values are on the vertical axis is displayed.

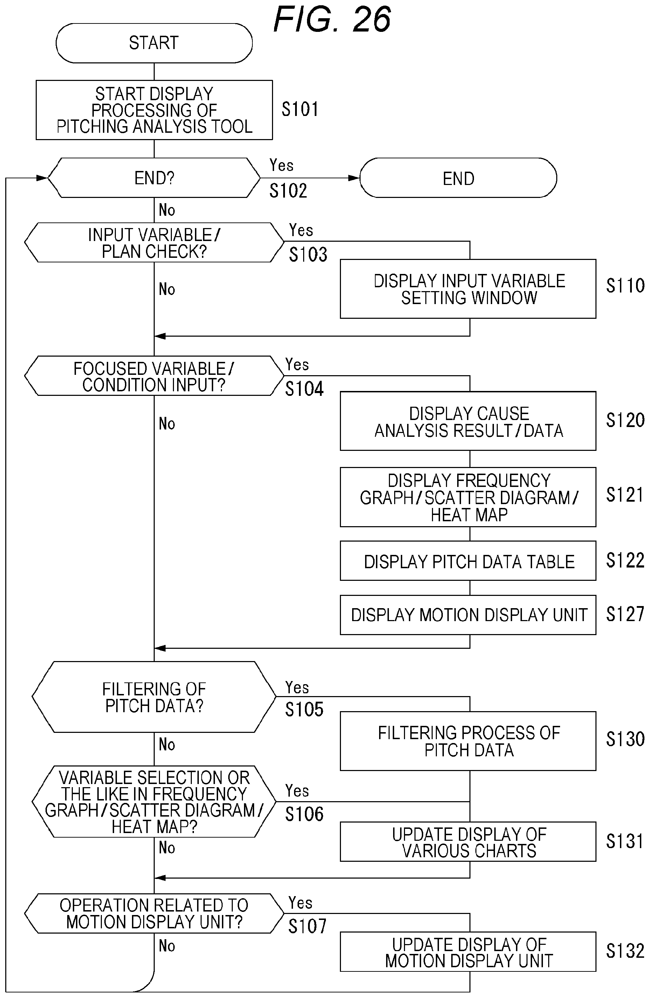

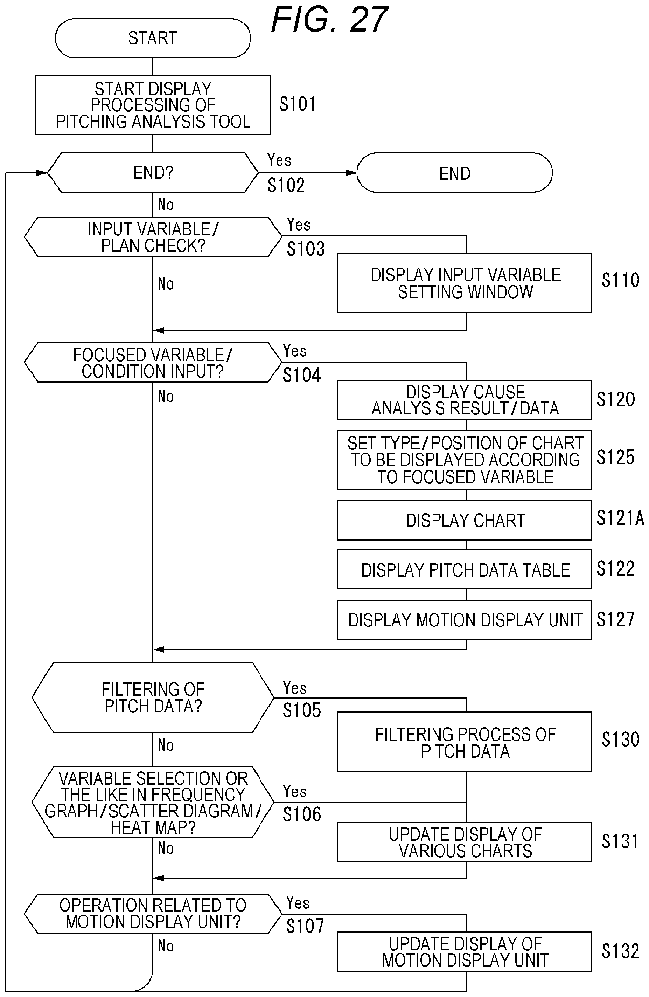

Figs. 26 and 27 illustrate processing examples of the server device 2 in the case of displaying the UI image as illustrated in Fig. 20 including the motion display unit 37 provided with the animation unit 120 and the graph unit 140 as described above. Note that Fig. 26 illustrates processing corresponding to the first processing example of Fig. 17, and Fig. 27 illustrates processing corresponding to the second processing example of Fig. 18. In Figs. 26 and 27, the same processes as those in Figs. 17 and 18 are denoted by the same step numbers, and redundant description is avoided.

First, the example of Fig. 26 is different from Fig. 17 in that step S127 and steps S107 and S132 are added.

As described above, in step S104, the server device 2 confirms whether or not the focused variable field 42 and the condition fields 43, 44, and 45 are input in the focused variable setting unit 31, and the load button 46 is operated. In a case where this operation is detected, the server device 2 performs the processing of steps S120, S121, and S122, and additionally performs display control of the motion display unit 37 in step S127.

For example, the server device 2 initially sets the display mode as the category comparison mode and generates an image of the animation unit 120. Then, the server device 2 refers to the focused variables input to the focused variable field 42 and the condition fields 43 and 44 and the information of the target pitcher, and extracts two data groups of the upper group and the lower group with the value related to the focused variables for the pitch data of the target pitcher. Then, the first skeleton model and the second skeleton model are generated from the data group of each group, and the image of the animation unit 120 as illustrated in Fig. 21 is generated.

Moreover, the server device 2 selects a specific input variable from the data group of each group, and generates an image of the graph unit 140 as illustrated in Fig. 24.

Note that the initial input variable for generating the time-series graph 143 may be an input variable having the highest contribution to the focused variable.

Then, such images of the animation unit 120 and the graph unit 140 are displayed on the display unit 5a of the terminal device 5.

Thus, the user can confirm the pitching form by the skeleton animation 125, and can confirm the time-series change in the input variable having a high contribution with respect to the focused variable.

Note that steps S104 to S127 described above are performed every time the load button 46 is operated. That is, every time the contents of the focused variable field 42 and the condition fields 43, 44, and 45 are updated, the images of the animation unit 120 and the graph unit 140 are also updated.

Note that the processing from step S104 to step S127 may be automatically performed at a timing when a predetermined number of pieces of EPTS data and a predetermined number of pieces of score data are fetched by the server device 2. Furthermore, the user may designate a period during which target data is read in advance, and the processing from step S104 to step S127 may be performed using the EPTS data or the score data read during the designated period.

In a period until it is determined in step S102 that the display ends, the server device 2 repeatedly executes the confirmation processing in steps S103 to S107.

In step S107, the server device 2 monitors whether or not an operation related to display of the motion display unit 37 is performed by the user.

The operation related to the display of the motion display unit 37 is an operation related to the animation unit 120 or the graph unit 140. Examples of the operation related to the animation unit 120 include the following.
(OP1) Switching between the category comparison mode and the one-ball look-back mode of the mode field 121
(OP2) Input of pitch selection field in case of one-ball look-back mode
(OP3) Change setting of viewpoint field 123
(OP4) Drag operation on skeleton animation 125
(OP5) Operation of scroll bar 127
(OP6) Operation for items in legend 126
(OP7) Operation of play button 128
(OP8) Operation of pause button 129
(OP9) Operation of moving pointer 131

Examples of the operation related to the graph unit 140 include the following.
(OP11) • Change of input variable of variable field
(OP12) • Operation for items in legend 142

In a case where these operations are detected, the server device 2 updates the display of the motion display unit 37, that is, the display of the animation unit 120 and the graph unit 140 according to the operation in step S132.

For example, the server device 2 performs processing such as switching between the display of Figs. 21 and 24 and the display of Figs. 22 and 25 and updating of the skeleton animation 125 (regeneration of the first skeleton model and the second skeleton model) according to the operation of (OP1) or (OP2).

Furthermore, the server device 2 performs processing of rotation and viewpoint movement of the skeleton animation 125 according to the operation of (OP3) and (OP4), and performs control of on/off of display of joint points and lines according to the operation of (OP6).

Furthermore, the server device 2 also controls the reproduction of the skeleton animation 125, the stop of the reproduction, the movement of the reproduction portion, and the like according to the operation of (OP7), (OP8), or (OP9).

In addition, the server device 2 performs processing of regenerating or updating the display of the time-series graph 143 according to the operation of (OP11) or (OP12).

Note that, in a case where the process proceeds from step S105 to step S130 and the filtering of the pitch data is performed, a change of the pitch data group serving as the basis of the skeleton animation 125 and the time-series graph 143 may occur. In this case, the display of the animation unit 120 and the graph unit 140 is updated in the process of step S131.

Next, a processing example of Fig. 27 will be described. The difference from Fig. 18 is that step S127 and steps S107 and S132 are added.

These steps S127, S107, and S132 are as described in Fig. 26. Therefore, the animation unit 120 and the graph unit 140 are sequentially displayed and updated.

In a case where the second processing example of Fig. 27 is used, as a result of the processing of steps S125 and S121A, it is possible that the motion display unit 37 is not displayed or the display position is changed depending on the selected focused variable.

### <7. Summary and modifications>

According to the above-described embodiments, the following effects can be obtained.

An information processing device 70 that functions as the server device 2 according to the embodiment includes a calculation unit 21 that calculates a contribution of another input variable to one or more input variables among a plurality of input variables from which it is possible to acquire data in a sport competition, and a presentation control unit 22 that selects an input variable according to the contribution calculated by the calculation unit 21 and a focused variable set among the plurality of input variables, and executes first information presentation using the selected input variable. Examples of the first information presentation described herein are display of the frequency graph 52, the scatter diagram 53, the heat map 54, and the like in the related chart display unit 33.

For example, skeleton capture data of a subject obtained from an image and information such as motion of a player in sports and behavior of a ball can be acquired as various types of sensing information. In a case where various displays are performed using these, an input variable having a high contribution is automatically selected for a certain focused variable, and a chart or the like is displayed.

A variable having a high contribution to the focused variable is automatically selected and reflected and displayed in a chart or the like, so that appropriate information related to the focused variable can be presented to a user such as an analyst. Furthermore, information using a variable having a high contribution to the focused variable is presented without the user repeating trial and error such as switching various variables to be referred to together with the focused variable, and the user can easily reach desirable information.

In addition, variables that can be detected in one competition are also diversified by skeleton capture data, various types of sensing data, and the like. The provision of the UI that performs display based on contribution calculation processing as in the embodiment in an environment in which a wide variety of variables are input also has a meaning of presenting how to handle various variables to the user, and there is also an aspect of supporting improvement of analysis ability of an analyst.

In the information processing device 70 functioning as the server device 2 according to the embodiment, the presentation control unit 22 performs control to cause second information presentation indicating the contribution to the focused variable to be executed for each of the input variables that is a calculation target of the contribution. Here, examples of the second information presentation are the display of the input variable list 50 of the contribution presentation unit 32 and the display of the causal graph unit 51.

By performing the contribution calculation processing in a state where the focused variable is designated, the contribution of each of other variables to the focused variable is obtained as a correlation index or the like. Accordingly, for each variable, the correlation index or the like is displayed as it is, or each variable is displayed in a mode according to the contribution (for example, the correlation index). Thus, the user can recognize the causal relationship of each of the other various variables with respect to the focused variable. The user also has an opportunity to know the relevance of the variable that has not been noticed so far.

In the embodiment, an example has been described in which control is performed to execute, as the second information presentation, display in which a level of the contribution is expressed for the another input variable with respect to the focused variable.

As illustrated in Fig. 8, in the input variable list 50 in the contribution presentation unit 32, the correlation index for the focused variable is illustrated for each variable, and the variables are sorted and displayed in descending order of the correlation index. Thus, the user can easily grasp what kind of variable has a high or low contribution to the focused variable.

In the analysis result network model 65 of the causal graph unit 51, the contribution is represented by the thickness of the line between directly related variables. Thus, the user can easily grasp whether the contribution of each variable is high or low with respect to the focused variable and the higher-order variable leading to the focused variable.

In the embodiment, an example has been described in which control is performed to execute, as the second information presentation, display in which perspective of relevance of the another input variable with respect to the focused variable to the focused variable is expressed.

As illustrated in Fig. 8, the input variable list 50 in the contribution presentation unit 32 indicates the number of hops from the focused variables for each variable. In the analysis result network model 65 of the causal graph unit 51, the first hop HP1 and the second hop HP2... are hierarchically illustrated as illustrated in Fig. 9. Thus, the user can easily grasp the perspective of the relevance up to the focused variable for each variable. That is, it is easy to understand directly related variables, indirectly related variables, and the like.

In addition, by displaying like the analysis result network model 65, the user can grasp the relationship between the variables in an overhead view.

In the embodiment, an example has been described in which control is performed to display, as the second information presentation, an input variable determined not to contribute to the focused variable among other input variables with respect to the focused variable.

As illustrated in Fig. 8, the variable determined not to contribute to the focused variables is displayed as the unrelated variable list 62 in the causal graph unit 51. Thus, the user can easily grasp variables unrelated to the focused variable.

In the embodiment, an example has been described in which the calculation unit 21 executes the contribution calculation processing according to the focused variable and an input of a condition of data to be a contribution calculation target.

For example, the focused variable field 42 in Fig. 7 enables the user to arbitrarily set the focused variable. In addition, the condition fields 43, 44, and 45 enable the user to arbitrarily set conditions of data to be subjected to the contribution calculation processing. Then, using the load button 46 as a trigger, the contribution of each input variable to the set focused variable is calculated using data of the set condition. Thus, the user can cause data to be extracted under any condition with respect to any focused variables and cause the contribution of another input variable to be analyzed.

In the embodiment, an example has been described in which control is performed to display, as the first information presentation, a chart indicating the relationship between the input variable assumed to have the highest contribution to the focused variable in the contribution calculation processing and the focused variable.

For example, in the related chart display unit 33 of Fig. 4, a chart indicating the relevance between the focused variable and the input variable having the highest contribution to the focused variable is displayed. Thus, even if the user does not select the input variable highly related to the focused variable by himself/herself, an appropriate chart is presented, and efficient analysis can be performed.

Depending on the type of chart, not only the first input variable having the highest contribution to the focused variable but also the second input variable having the second highest contribution to the focused variable may be used. Moreover, third and fourth input variables having the third and fourth highest contributions may be used.

In the embodiment, an example has been described in which control is performed to display, as the first information presentation, the frequency graph 52 using the input variable selected according to the contribution to the focused variable and the focused variable.

For example, by displaying the frequency graph 52 as illustrated in Figs. 10 and 11 to 14, it is possible to provide a display that can easily grasp the frequency relationship between the category and the numerical value in the focused variable and the category and the numerical value in the first input variable.

Note that not only the frequency graph indicating the relationship between the first input variable and the focused variable but also a frequency graph indicating the relationship between another input variable, for example, the second input variable and the focused variable may be displayed.

In the embodiment, an example has been described in which control is performed to display, as the first information presentation, the scatter diagram 53 using the input variable selected according to the contribution to the focused variable and the focused variable.

For example, by displaying the scatter diagram 53 in which the first input variable and the second input variable are plotted for each pitch as illustrated in Figs. 10 and 15, it is possible to provide a display in which the relationship between the first input variable and the second input variable can be easily grasped with respect to the category and the numerical value in the focused variable.

In the embodiment, an example has been described in which control is performed to display, as the first information presentation, the heat map 54 using the input variable selected according to the contribution to the focused variable and the focused variable.

By displaying the heat map 54 representing the frequency of occurrence of data in which the first input variable and the second input variable are plotted in color and shade for each pitch as illustrated in Figs. 10 and 15, it is possible to provide a display in which the relationship between the first input variable and the second input variable can be easily grasped with respect to the category and the numerical value in the focused variable. In particular, in a case where it is difficult to know the occurrence frequency due to overlapping of marks plotted in the scatter diagram 53, the heat map 54 is preferable.

In the embodiment, an example has been described in which control is performed to display, as the first information presentation, the skeleton animation 125 and the time-series graph 143 using the input variable selected according to the contribution to the focused variable and the focused variable.

As described in Figs. 20 to 27, the skeleton animation 125 is useful for the comparative analysis of the pitching form, and a time-series change of the input variable contributing to the pitching result can be confirmed by the time-series graph 143. In addition, these displays are also desirable in that the analysis result can be intuitively known.

Note that the skeleton animation 125 and the time-series graph 143 have been described as examples of the pitching form, but can also be applied to, for example, a swing form of a batter.

In the embodiment, an example has been described in which the calculation unit 21 estimates a causal relationship between the plurality of input variables and calculates the contribution on the basis of the estimation result.

Furthermore, in the embodiment, an example has been described in which the calculation unit 21 estimates importance of the another input variable with respect to one or more input variables using a machine learning model, and calculates the contribution on the basis of an estimation result.

The contribution between the input variables can be appropriately calculated by using the estimation result of the causal relationship and the estimation result of the importance.

In the embodiment, an example has been described in which the server device 2 receives a change operation for one or both of the first information presentation, and performs display update control of the first information presentation according to the change operation.

For example, in the related chart display unit 33 of Fig. 4, each chart as the frequency graph 52, the scatter diagram 53, and the heat map 54 is displayed, but all or part of respective fields (first input variable field 91, focused variable field 92, and first input variable field 94 to second input variable field 98) to which the input variable and the focused variable are input can be changed by the pull-down menu 99. Then, the chart is updated according to the change (Steps S106 and S131 in Figs. 17 and 18).

Thus, the user can view the chart indicating not only the set focused variable and the automatically selected input variable but also the relevance between any variables.

In the embodiment, an example has been described in which a change operation of the focused variable or the input variable is possible by selection from a pull-down menu with respect to the input field of the focused variable or the input variable on the screen, and the items of the pull-down menu are input variables sorted in the order of the contribution calculated in the contribution calculation processing.

For example, as illustrated for the first input variable field 91 of the frequency graph 52 in Fig. 10, the first input variable can be changed by the pull-down menu 99. Other fields are similarly changeable. Since the pull-down menu 99 is arranged in descending order of the contribution, the user can easily select an input variable having a significant relationship.

In the embodiment, an example has been described in which the presentation control unit 22 performs control to display data of each input variable for each pitch of a pitcher extracted according to a specified filter condition, and update the display so that the first information presentation is performed within a range of the displayed pitch.

For example, the pitch data filtering unit 34 and the pitch data unit 35 in Fig. 16 are displayed. Then, the pitch data unit 35 displays the pitch data table 57 that displays the data of each input variable for each pitch. The user can extract a pitch by determining a condition such as any game according to the filter condition. Then, when the pitch data table 57 is updated under the filter condition, the chart is updated accordingly (steps S105 and S131 in Figs. 17 and 18).

Thus, the user can extract any pitch and then view a chart indicating the relevance between variables within the range of the pitch.

In the embodiment, an example has been described in which the presentation control unit 22 performs control so that all or a part of data of each input variable for each pitch is displayed in order of the contribution calculated in the contribution calculation processing.

For example, in the pitch data table 57 of Fig. 16, the input variables of the third and subsequent columns are arranged in descending order of the contribution (correlation index). This makes it easy to confirm specific data (category and numerical value) about the input variable having a high contribution.

In the embodiment, an example has been described in which the presentation control unit 22 performs processing of setting an input variable to be the target of the contribution calculation processing according to a selection operation of the user.

For example, the input variable setting window 60 of Fig. 6 is displayed so that the user can select the input variable. Thus, the contribution calculation processing and the presentation control processing are executed using the input variable within the range desired by the user. The user can select the range of the input variable according to his/her system usage situation.

In the embodiment, an example has been described in which the presentation control unit 22 sets the display content or the display position in the first information presentation according to the focused variable.

For example, the calculation unit 21 sets the type and display position of the chart to be displayed as step S125 in Fig. 18. Thus, an appropriate display can be provided to the user according to the focused variable.

In the embodiment, the UI image in a case where baseball is taken as an example of the sports event has been exemplified, but the same applies to softball.

For example, a system preferable for analysis in baseball or softball can be constructed by applying a variable related to a pitching result, a variable related to a pitching trajectory, score information, skeleton information of a pitcher or a batter, and the like as input variables or focused variables.

However, it is preferable to apply the information analysis system 1 of the embodiment to sports other than baseball and softball. For example, the information analysis system 1 can be applied to soccer, basketball, tennis, volleyball, table tennis, track and field, gymnastics, swimming, ski/snowboard, skate, horse riding, and various other sports. An input variable suitable for each competition may be selected.

Moreover, the present invention can also be applied to competitions such as darts and pool, dances, and the like.

In addition, the present invention is not limited to sports, and can also be applied to motion of play, walking, analysis of daily motion, analysis of rehabilitation activities, and the like.

The program according to the embodiment is a program for causing, for example, a CPU, a digital signal processor (DSP), an AI processor, or the like, or the information processing device 70 including the CPU, the DSP, the AI processor, or the like, to perform the processing illustrated in Figs. 17 and 18 or Fig. 26 and 27.

That is, the program according to the embodiment is a program for causing an information processing device to execute contribution calculation processing of calculating a contribution of another input variable to one or more input variables among a plurality of input variables from which it is possible to acquire data in a sport competition, and presentation control processing of selecting an input variable according to a result of the contribution calculation processing and a focused variable set among the plurality of input variables, and executing first information presentation using the selected input variable.

With such a program, the information processing device 70 constituting the information analysis system 1 according to the embodiment can be achieved in, for example, a computer device, a mobile terminal device, or another device capable of performing information processing.

Such a program may be stored in advance in an HDD as a storage medium built in a device such as a computer device, a ROM in a microcomputer including a CPU, or the like.

Alternatively, the program may be temporarily or permanently stored (recorded) in a removable storage medium such as a flexible disk, a compact disc read only memory (CD-ROM), a magneto optical (MO) disk, a digital versatile disc (DVD), a Blu-ray disc (registered trademark), a magnetic disk, a semiconductor memory, or a memory card. Such a removable storage medium may be provided as so-called package software.

Furthermore, such a program may be installed from the removable storage medium into a personal computer and the like, or may be downloaded from a download site through a network such as a local area network (LAN) or the Internet.

In addition, such a program is suitable for providing the information processing device 70 constituting the information analysis system 1 according to the embodiment in a wide range. By downloading the program to a mobile terminal device such as a smartphone or a tablet, an imaging device, a mobile phone, a personal computer, a gaming device, a video device, a personal digital assistant (PDA), or the like, for example, the smartphone or the like can function as the information processing device 70 constituting the information analysis system 1 in the present disclosure.

Although the description has been given assuming that the server device 2 is a cloud server, as described above, the processing of the server device 2 described in the embodiment may be executed by the terminal device 5.

For example, by installing the above-described program as application software in the terminal device 5, the terminal device 5 can execute processing as illustrated in Figs. 17 and 18 or Figs. 26 and 27.

Therefore, the user can perform any motion analysis not only online or offline but also by the UI image as described with reference to Figs. 4 and 5 or 20.

Note that, the effects described in the present specification are merely examples and are not limited, and other effects may be provided.

Note that the present technology can also have the following configurations.
(1) An information processing device including:
   a calculation unit that calculates a contribution of another input variable to one or more input variables among a plurality of input variables from which it is possible to acquire data in a sport competition; and
   a presentation control unit that selects an input variable according to the contribution calculated by the calculation unit and a focused variable set among the plurality of input variables, and executes first information presentation using the selected input variable.
(2) The information processing device according to (1) above, in which
   the presentation control unit
   performs control to cause second information presentation indicating the contribution to the focused variable to be executed for each of the input variables that is a calculation target of the contribution.
(3) The information processing device according to (2) above, in which
   the presentation control unit
   performs control to execute, as the second information presentation, display in which a level of the contribution is expressed for the another input variable with respect to the focused variable.
(4) The information processing device according to (2) or (3) above, in which
   the presentation control unit
   performs control to execute, as the second information presentation, display in which perspective of relevance of the another input variable with respect to the focused variable to the focused variable is expressed.
(5) The information processing device according to any one of (2) to (4) above, in which
   the presentation control unit
   performs control to display, as the second information presentation, an input variable determined not to contribute to the focused variable among other input variables with respect to the focused variable.
(6) The information processing device according to any one of (1) to (5) above, in which
   the calculation unit
   calculates the contribution according to the focused variable and an input of a condition of data to be a target of calculating the contribution.
(7) The information processing device according to any one of (1) to (6) above, in which
   the presentation control unit
   performs control to display, as the first information presentation, a chart indicating a relationship between the input variable assumed to have a highest contribution to the focused variable on the basis of a calculation result by the calculation unit and the focused variable.
(8) The information processing device according to any one of (1) to (7) above, in which
   the presentation control unit
   performs control to display, as the first information presentation, at least one of a frequency graph, a scatter diagram, a heat map, a motion animation image, or motion time-series information using an input variable selected according to a contribution to the focused variable and the focused variable.
(9) The information processing device according to any one of (1) to (8) above, in which
   the calculation unit estimates a causal relationship between the plurality of input variables and calculates the contribution on the basis of an estimation result.
(10) The information processing device according to any one of (1) to (9) above, in which
   the calculation unit estimates importance of the another input variable with respect to the one or more input variables using a machine learning model, and calculates the contribution on the basis of an estimation result.
(11) The information processing device according to any one of (1) to (10) above, in which
   the presentation control unit
   receives a change operation for one or both of the focused variable and the input variable in the first information presentation, and performs display update control of the first information presentation according to the change operation.
(12) The information processing device according to (11) above, in which
   the change operation is enabled by selection from a menu for the input field of the focused variable or the input variable on the screen, and
   the menu items are input variables sorted in order of the contribution calculated by the calculation unit.
(13) The information processing device according to any one of (1) to (12) above, in which
   the sports competition is baseball or softball, and
   the presentation control unit
   performs control to display data of each of the input variables for each pitch of a pitcher extracted according to a specified filter condition, and update the display so that the first information presentation is performed within a range of the displayed pitch.
(14) The information processing device according to (13) above, in which
   the presentation control unit
   performs control so that all or a part of data of each of the input variables for each pitch is displayed in order of the contribution calculated by the calculation unit.
(15) The information processing device according to any one of (1) to (14) above, in which
   the presentation control unit
   performs processing of setting an input variable to be a target of processing of calculating the contribution by the calculation unit according to a selection operation of a user.
(16) The information processing device according to any one of (1) to (15) above, in which
   the presentation control unit
   performs control to display, as the first information presentation, a chart using an input variable selected according to a contribution to the focused variable and the focused variable, and
   sets a display content or a display position in the first information presentation according to the focused variable.
(17) The information processing device according to any one of (1) to (16) above, in which
   the sports competition is baseball or softball.
(18) An information processing method for causing an information processing device to perform:
   contribution calculation processing of calculating a contribution of another input variable to one or more input variables among a plurality of input variables from which it is possible to acquire data in a sport competition; and
   presentation control processing of selecting an input variable according to a result of the contribution calculation processing and a focused variable set among the plurality of input variables, and executing first information presentation using the selected input variable.
(19) A program for causing an information processing device to execute:
   contribution calculation processing of calculating a contribution of another input variable to one or more input variables among a plurality of input variables from which it is possible to acquire data in a sport competition; and
   presentation control processing of selecting an input variable according to a result of the contribution calculation processing and a focused variable set among the plurality of input variables, and executing first information presentation using the selected input variable.
(20) An information presentation system including:
   a display unit;
   a calculation unit that calculates a contribution of another input variable to one or more input variables among a plurality of input variables from which it is possible to acquire data in a sport competition; and
   a presentation control unit that selects an input variable according to the contribution calculated by the calculation unit and a focused variable set among the plurality of input variables, and causes the display unit to execute first information presentation using the selected input variable.

### REFERENCE SIGNS LIST

- 1: Information analysis system
- 2: Server device
- 3: Score data server
- 4: Sensor
- 5: Terminal device
- 10: Imaging device
- 21: Calculation unit
- 21a: Clip processing unit
- 21b: EPTS data processing unit
- 21c: Score data processing unit
- 21d: contribution calculation processing unit
- 22: Presentation control unit
- 23: Storage control unit
- 30: Input variable setting unit
- 31: Focused variable setting unit
- 32: contribution presentation unit
- 33: Related chart display unit
- 34: Pitch data filtering unit
- 35: Pitch data unit
- 36: Clip display unit
- 70: Information processing device
- 71: CPU

## Claims

1. An information processing device comprising:
a calculation unit that calculates a contribution of another input variable to one or more input variables among a plurality of input variables from which it is possible to acquire data in a sport competition; and
a presentation control unit that selects an input variable according to the contribution calculated by the calculation unit and a focused variable set among the plurality of input variables, and executes first information presentation using the selected input variable.

2. The information processing device according to claim 1, wherein
the presentation control unit
performs control to cause second information presentation indicating the contribution to the focused variable to be executed for each of the input variables that is a calculation target of the contribution.

3. The information processing device according to claim 2, wherein
the presentation control unit
performs control to execute, as the second information presentation, display in which a level of the contribution is expressed for the another input variable with respect to the focused variable.

4. The information processing device according to claim 2, wherein
the presentation control unit
performs control to execute, as the second information presentation, display in which perspective of relevance of the another input variable with respect to the focused variable to the focused variable is expressed.

5. The information processing device according to claim 2, wherein
the presentation control unit
performs control to display, as the second information presentation, an input variable determined not to contribute to the focused variable among other input variables with respect to the focused variable.

6. The information processing device according to claim 1, wherein
the calculation unit
calculates the contribution according to the focused variable and an input of a condition of data to be a target of calculating the contribution.

7. The information processing device according to claim 1, wherein
the presentation control unit
performs control to display, as the first information presentation, a chart indicating a relationship between the input variable assumed to have a highest contribution to the focused variable on a basis of a calculation result by the calculation unit and the focused variable.

8. The information processing device according to claim 1, wherein
the presentation control unit
performs control to display, as the first information presentation, at least one of a frequency graph, a scatter diagram, a heat map, a motion animation image, or motion time-series information using an input variable selected according to a contribution to the focused variable and the focused variable.

9. The information processing device according to claim 1, wherein
the calculation unit estimates a causal relationship between the plurality of input variables and calculates the contribution on a basis of an estimation result.

10. The information processing device according to claim 1, wherein
the calculation unit estimates importance of the another input variable with respect to the one or more input variables using a machine learning model, and calculates the contribution on a basis of an estimation result.

11. The information processing device according to claim 1, wherein
the presentation control unit
receives a change operation for one or both of the focused variable and the input variable in the first information presentation, and performs display update control of the first information presentation according to the change operation.

12. The information processing device according to claim 11, wherein
the change operation is enabled by selection from a menu for the input field of the focused variable or the input variable on the screen, and
the menu items are input variables sorted in order of the contribution calculated by the calculation unit.

13. The information processing device according to claim 1, wherein
the sports competition is baseball or softball, and
the presentation control unit
performs control to display data of each of the input variables for each pitch of a pitcher extracted according to a specified filter condition, and update the display so that the first information presentation is performed within a range of the displayed pitch.

14. The information processing device according to claim 13, wherein
the presentation control unit
performs control so that all or a part of data of each of the input variables for each pitch is displayed in order of the contribution calculated by the calculation unit.

15. The information processing device according to claim 1, wherein
the presentation control unit
performs processing of setting an input variable to be a target of processing of calculating the contribution by the calculation unit according to a selection operation of a user.

16. The information processing device according to claim 1, wherein
the presentation control unit
performs control to display, as the first information presentation, a chart using an input variable selected according to a contribution to the focused variable and the focused variable, and
sets a display content or a display position in the first information presentation according to the focused variable.

17. The information processing device according to claim 1, wherein
the sports competition is baseball or softball.

18. An information processing method for causing an information processing device to perform:
contribution calculation processing of calculating a contribution of another input variable to one or more input variables among a plurality of input variables from which it is possible to acquire data in a sport competition; and
presentation control processing of selecting an input variable according to a result of the contribution calculation processing and a focused variable set among the plurality of input variables, and executing first information presentation using the selected input variable.

19. A program for causing an information processing device to execute:
contribution calculation processing of calculating a contribution of another input variable to one or more input variables among a plurality of input variables from which it is possible to acquire data in a sport competition; and
presentation control processing of selecting an input variable according to a result of the contribution calculation processing and a focused variable set among the plurality of input variables, and executing first information presentation using the selected input variable.

20. An information presentation system comprising:
a display unit;
a calculation unit that calculates a contribution of another input variable to one or more input variables among a plurality of input variables from which it is possible to acquire data in a sport competition; and
a presentation control unit that selects an input variable according to the contribution calculated by the calculation unit and a focused variable set among the plurality of input variables, and causes the display unit to execute first information presentation using the selected input variable.
